(19) Europäisches Patentamt
European Patent Office
Office européen des brevets

(11) **EP 4 385 680 A1**

(12) **EUROPEAN PATENT APPLICATION**
published in accordance with Art. 153(4) EPC

(43) Date of publication:
**19.06.2024 Bulletin 2024/25**

(21) Application number: **22869616.7**

(22) Date of filing: **28.03.2022**

(51) International Patent Classification (IPC):
**B25J 13/08** (2006.01)

(52) Cooperative Patent Classification (CPC):
**B25J 13/08**

(86) International application number:
**PCT/JP2022/014836**

(87) International publication number:
**WO 2023/042464 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2021 JP 2021149972**

(71) Applicant: **Sony Group Corporation
Tokyo 108-0075 (JP)**

(72) Inventor: **TSUZAKI, Ryoichi
Tokyo 108-0075 (JP)**

(74) Representative: **D Young & Co LLP
3 Noble Street
London EC2V 7BQ (GB)**

(54) **ROBOT DEVICE AND ROBOT CONTROL METHOD**

(57)    In a robot device that identifies an obstacle on the basis of detection information of a sensor, highly accurate robot control by correct obstacle identification is realized without erroneously recognizing a leg, an arm, or the like of the robot itself as an obstacle. A self-region filter processing unit removes object information corresponding to a component of a robot device from object information included in detection information of a visual sensor, a map image generation unit generates map data based on object information from which the object information corresponding to the component of the robot device has been removed, and a robot control unit controls the robot device on the basis of the generated map data. The self-region filter processing unit calculates variable filter regions of different sizes according to the motion speed of the movable part of the robot device, and executes processing of removing the object information in the variable filter regions from the detection information of the visual sensor.

FIG. 7

EP 4 385 680 A1

**Description**

TECHNICAL FIELD

The present disclosure relates to a robot device and a robot control method. Specifically, the present invention relates to a robot device and a robot control method capable of executing accurate control based on correct obstacle determination without erroneously recognizing a leg, an arm, or the like of the robot itself as an obstacle.

BACKGROUND ART

In recent years, autonomous traveling type robots such as walking type robots that move by controlling a plurality of legs and wheel driving type robots that move by rotating wheels are used in various fields.

The robot can perform various operations even at disaster sites or the like where people are difficult to enter, for example.

However, in order for the walking type robots and the wheel traveling type robots to stably move, it is necessary to grasp obstacles in a traveling direction, a walking surface, and unevenness, inclination, and the like of a traveling surface, identify a route on which stable walking or traveling is possible, and further perform landing of a foot or wheel traveling according to a shape of the walking surface or the traveling surface.

For example, when a foot of a walking type robot is placed on a surface with severe unevenness or a surface with large inclination, there is a possibility that the robot falls down and cannot move forward.

In order to prevent such a problem, many autonomous traveling type robots are mounted with sensors such as cameras for recognizing the environment around the robot, and execute control to select and move on a route for performing stable walking or traveling using sensor detection information.

For example, processing of generating an environmental map including three-dimensional shape data of the surroundings using data obtained from the sensors and determining a movement route with reference to the generated environmental map or the like is performed.

However, there are the following problems in the case of performing the processing of creating the environmental map using the data obtained from the sensors and the processing of analyzing the created environmental map as described above.

This is a problem that a component of the robot, such as a leg or a hand of the robot itself, is recognized as an obstacle.

For example, the walking type robot travels while moving the legs back and forth. When a sensor such as a camera of the robot detects the leg of the robot, this leg may be erroneously recognized as an obstacle.

When such erroneous recognition occurs, the robot may determine that the robot cannot travel on a route where the robot can originally travel, and the robot may stop traveling.

Furthermore, for example, in the case of a robot that performs work using an arm (arm portion) or a hand of the robot, a sensor such as a camera of the robot may detect the arm or the hand of the robot and erroneously recognize the arm or the hand as an obstacle.

In such a case, the robot determines that the prescribed work cannot be performed, and the work of the robot is stopped.

As a conventional technique that discloses a configuration that solves the problem of erroneously recognizing a part of a robot as an obstacle as described above, for example, there is the following document.

For example, Patent Document 1 (Japanese Patent No. 4961860) discloses a configuration in which forward kinematics calculation is performed from model information of a robot and position information of an actuator, a three-dimensional body position of the robot is calculated, the calculated body position and a position and a viewing angle of a visual sensor are integrated to calculate in which part of the visual sensor the body of the robot is imaged, and a robot body part is excluded from an obstacle determination target.

However, the method disclosed in Patent Document 1 has a problem that the body part of the robot cannot be accurately removed from the image in a case where there is an error between the robot model information and the actual machine of the robot.

Furthermore, Patent Document 2 (Japanese Patent Application Laid-Open No. 2011-212818) discloses a configuration in which in a robot having a visual sensor that emits and detects laser light, coating that absorbs the laser light is performed on a surface of the robot, and a body of the robot is not detected as an obstacle.

However, in this method, it is necessary to perform coating for absorbing laser light on the robot surface, to use a visual sensor for emitting and detecting laser light, and these configurations are essential, and there is a problem that versatility is poor.

Moreover, Patent Document 3 (Japanese Patent Application Laid-Open No. 1-183395) discloses a configuration in which a robot arm is provided with a shielding plate that shields a shape of the robot arm and has a reflectance or a shape that can be distinguished from a shape of an object, thereby removing a body of the robot from sensor detection information.

This method requires a shielding plate having a special reflectance and a shape, and has a problem of cost increase, and further has a problem that the movement of the robot is hindered by attachment of the shielding plate.

CITATION LIST

PATENT DOCUMENT

Patent Document 1: Japanese Patent No. 4961860
Patent Document 2: Japanese Patent Application Laid-Open No. 2011-212818
Patent Document 3: Japanese Patent Application Laid-Open No. 1-183395

SUMMARY OF THE INVENTION

PROBLEMS TO BE SOLVED BY THE INVENTION

The present disclosure has been made in view of the problems described above, for example, and an object thereof is to provide a robot device and a robot control method capable of safely controlling a robot without erroneously recognizing a part of the robot as an obstacle and without causing the robot to collide with or come into contact with a true obstacle.

SOLUTIONS TO PROBLEMS

A first aspect of the present disclosure is

a robot device including
a data processing unit that analyzes detection information of a visual sensor and controls an operation of the robot device,
in which the data processing unit includes
a self-region filter processing unit that removes object information corresponding to a component of the robot device from object information included in the detection information of the visual sensor,
the self-region filter processing unit includes:

a variable filter region calculation unit that calculates a variable filter region corresponding to a movable part of the robot device; and
a filter processing unit that removes object information in the variable filter region from the detection information of the visual sensor, and
the variable filter region calculation unit calculates variable filter regions having different sizes according to a motion speed of the movable part as a variable filter region calculation target.

Moreover, a second aspect of the present disclosure is
a robot control method for executing motion control of a robot device, the robot control method including:

a self-region filter processing step of removing, by a self-region filter processing unit, object information corresponding to a component of the robot device from object information included in detection information of a visual sensor;
a map data generation step of generating, by a map image generation unit, map data based on object information from which object information corresponding to the component of the robot device has been removed; and
a robot control step of controlling, by a robot control unit, the robot device on the basis of the map data,
in which the self-region filter processing step includes:

a step of executing a variable filter region calculation process of calculating variable filter regions having different sizes according to a motion speed of a movable part of the robot device; and
a step of executing a process of removing object information in the variable filter regions from the detection information of the visual sensor.

Still other objects, features, and advantages of the present disclosure will become apparent from more detailed description based on examples of the present disclosure described later and the accompanying drawings. Note that a system described herein is a logical set configuration of a plurality of devices, and is not limited to a system in which devices with respective configurations are in the same housing.

According to a configuration of an example of the present disclosure, in a robot device that identifies an obstacle on the basis of detection information of a sensor, highly accurate robot control by correct obstacle identification is realized without erroneously recognizing a leg, an arm, or the like of the robot itself as an obstacle.

Specifically, for example, the self-region filter processing unit removes the object information corresponding to the component of the robot device from the object information included in the detection information of the visual sensor, the map image generation unit generates map data based on the object information from which the object information corresponding to the component of the robot device has been removed, and the robot control unit controls the robot device on the basis of the generated map data. The self-region filter processing unit calculates variable filter regions of different sizes according to the motion speed of the movable part of the robot device, and executes processing of removing the object information in the variable filter regions from the detection information of the visual sensor.

With this configuration, in the robot device that identifies an obstacle on the basis of the detection information of the sensor, highly accurate robot control by correct obstacle identification is realized without erroneously recognizing a leg, an arm, or the like of the robot itself as an obstacle.

Note that the effects described herein are merely examples and are not limited, and additional effects may also be provided.

BRIEF DESCRIPTION OF DRAWINGS

Fig. 1 is a diagram for explaining a configuration example of a four-legged robot that is an example of a robot device of the present disclosure.

Fig. 2 is a diagram for explaining a configuration example of a four-legged robot that is an example of the robot device of the present disclosure.

Fig. 3 is a diagram for explaining a configuration example of a two-legged robot that is an example of the robot device of the present disclosure.

Fig. 4 is a diagram for explaining a travel example of the robot device.

Fig. 5 is a diagram for explaining problems in traveling of the robot device using sensor detection information.

Fig. 6 is a diagram for explaining an overview of filter processing executed by the robot device of the present disclosure.

Fig. 7 is a diagram for explaining an overview of filter processing executed by the robot device of the present disclosure.

Fig. 8 is a diagram for explaining an overview of filter processing executed by the robot device of the present disclosure.

Fig. 9 is a diagram for explaining a configuration example of the robot device of the present disclosure.

Fig. 10 is a diagram for explaining processing executed by a three-dimensional point cloud (PC) generation unit.

Fig. 11 is a diagram for explaining a detailed configuration example of a self-region filter processing unit.

Fig. 12 is a diagram for explaining a specific example of processing executed by a variable padding calculation unit of the self-region filter processing unit.

Fig. 13 is a diagram for explaining a specific example of processing executed by a variable filter region calculation unit of the self-region filter processing unit.

Fig. 14 is a diagram for explaining a specific example of processing executed by the variable filter region calculation unit of the self-region filter processing unit.

Fig. 15 is a diagram for explaining a specific example of processing executed by the variable filter region calculation unit of the self-region filter processing unit.

Fig. 16 is a diagram for explaining a specific example of processing executed by a three-dimensional point cloud filter processing unit of the self-region filter processing unit.

Fig. 17 is a diagram for explaining a specific example of processing executed by the variable filter region calculation unit of the self-region filter processing unit.

Fig. 18 is a diagram for explaining a specific example of processing executed by the variable filter region calculation unit of the self-region filter processing unit.

Fig. 19 is a diagram for explaining a specific example of processing executed by the variable filter region calculation unit of the self-region filter processing unit.

Fig. 20 is a diagram for explaining a specific example of variable padding and variable filter region calculation processing in the self-region filter processing unit.

Fig. 21 is a diagram for explaining a specific example of variable padding and variable filter region calculation processing in the self-region filter processing unit.

Fig. 22 is a diagram for explaining a specific example of variable padding and variable filter region calculation processing in the self-region filter processing unit.

Fig. 23 is a diagram for explaining a specific example of variable padding and variable filter region calculation processing in the self-region filter processing unit.

Fig. 24 is a diagram for explaining a specific example of variable padding and variable filter region calculation processing in the self-region filter processing unit.

Fig. 25 is a diagram for explaining a specific example of variable padding and variable filter region calculation processing in the self-region filter processing unit.

Fig. 26 is a diagram for explaining a configuration example of the robot device of the present disclosure.

Fig. 27 is a diagram for explaining a hardware configuration example of the robot device of the present disclosure.

Fig. 28 is a diagram for explaining a system configuration example including the robot device and a server of the present disclosure.

Fig. 29 is a diagram for explaining a hardware configuration example of the server in a system configuration including the robot device and the server of the present disclosure.

MODE FOR CARRYING OUT THE INVENTION

Hereinafter, a robot device and a robot control method of the present disclosure will be described in detail with reference to the drawings. Note that the description will be made in accordance with the following items.

1. Overview of robot device of present disclosure
2. Overview of processing executed by robot device of present disclosure
3. (Example 1) Details of robot device and robot control method of Example 1 of present disclosure
4. (Example 2) Calculation processing example of variable filter region considering linear motion of linear motion joint
5. Other examples

5-(a) Example 3: Example of calculating variable filter region by multiplying movable part size of robot by padding region
5-(b) Example 4: Example of calculating variable filter region by distinguishing between operation region and non-operation region of robot movable part
5-(c) Example 5: Example of calculating variable filter region by identifying motion direction of robot movable part
5-(d) Example 6: Example in which fixed padding region and variable padding region are set and variable filter region is calculated on the basis of these two padding regions
5-(e) Example 7: Example of calculating variable filter region corresponding to movable part including a plurality of rotary joints

6. (Example 8) Example in which filter processing is performed not on three-dimensional point cloud data but on distance image
7. Hardware configuration example of robot device or the like of present disclosure
8. Conclusion of configuration of present disclosure

[1. Overview of robot device of present disclosure]

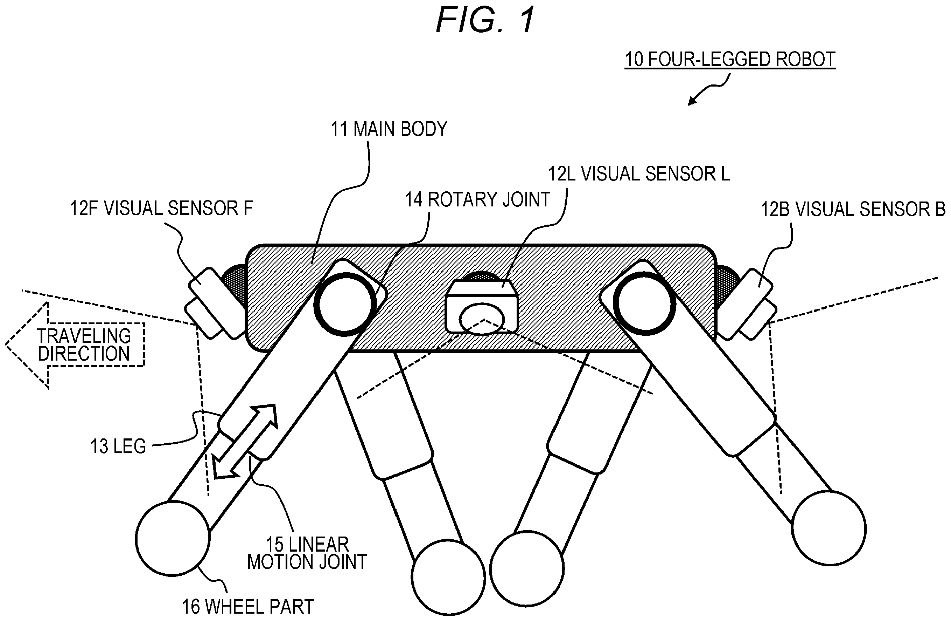

First, an overview of a robot device of the present disclosure will be described with reference to Fig. 1 and the subsequent drawings.
Fig. 1 is a diagram illustrating a four-legged robot 10 that is an example of the robot device of the present disclosure.
The four-legged robot 10 is a walking type robot that moves by moving four legs back and forth.
As illustrated in Fig. 1, the four-legged robot 10 includes a main body 11, a visual sensor 12 for recognizing the surrounding environment of the robot, and a leg 13 for moving.
The four-legged robot 10 illustrated in Fig. 1 includes the following four visual sensors 12 that individually perform environment recognition in four directions of front, back, left, and right of the four-legged robot 10.

Visual sensor F (Front) 12F for environment recognition in a robot traveling direction (forward direction);
Visual sensor B (Back) 12B for environment recognition in a backward direction;

Visual sensor L (Left) 12L for environment recognition in a left direction; and
Visual sensor R (Right) 12R for environment recognition in a right direction.

Note that the drawing does not illustrate the visual sensor R (Right) 12R for environment recognition in the right direction.

The visual sensor 12 is only required to have a configuration capable of acquiring information for checking an obstacle in the traveling direction, a situation of a ground contact surface of a foot, and the like, for example, three-dimensional shape information of surrounding objects, for the four-legged robot 10 to safely travel, and for example, a stereo camera, an omnidirectional camera, a light detection and ranging (LiDAR), a time of flight (TOF) sensor, and the like can be used.

Note that both the LiDAR and TOF sensors are sensors capable of measuring an object distance.

The example illustrated in Fig. 1 is an example in which four visual sensors are provided, but the configuration is only required to be able to acquire environmental information (three-dimensional position and three-dimensional shape) around the four-legged robot 10, and for example, a configuration using one omnidirectional camera, a configuration using a combination of one omnidirectional camera and one LiDAR, and the like are also possible.

The four-legged robot 10 illustrated in Fig. 1 includes a rotary joint 14, a linear motion joint 15, and a wheel part 16 in the leg 13.

The rotary joint 14 is a joint that rotationally drives the entire leg 13 in a front-rear direction. The linear motion joint 15 is a joint that slidingly moves a lower leg part of the leg 13 so as to expand and contract with respect to an upper leg part.

Each of the joints 14 and 15 includes, for example, an actuator, an encoder for detecting the position of the actuator, a speed reducer, a torque sensor for detecting torque on the output shaft side, and the like.

A data processing unit (control unit) configured in the four-legged robot 10 illustrated in Fig. 1 receives and analyzes sensor detection information from the visual sensor 12, and recognizes the surrounding environment of the robot.

For example, a position, a distance, a shape, and the like of an obstacle around the robot are analyzed using a captured image of a camera constituting the visual sensor 12 or detection information of a distance sensor such as LiDAR or TOF. Moreover, by using the obstacle analysis result, a safe travel route is determined so as to avoid the obstacle, and travel control of the robot is executed.

Note that, in order to move along the determined travel route, the data processing unit (control unit) in the robot controls the rotary joint 14, the linear motion joint 15, and the wheel part 16 of each leg 13 to operate the leg 13, and moves the robot along the determined safe travel route.

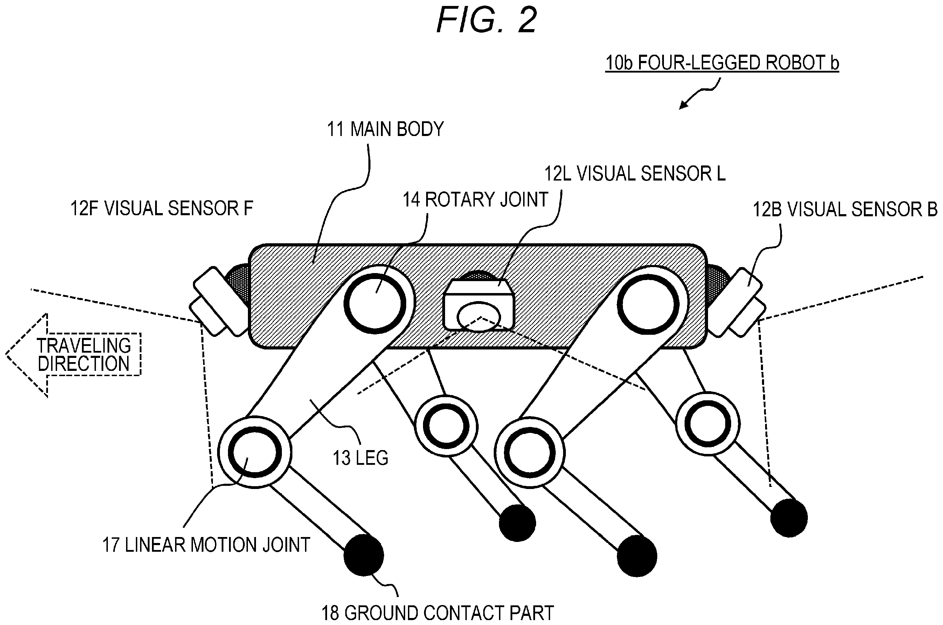

Fig. 2 is a diagram illustrating a four-legged robot b, 10b having a joint configuration different from that of the four-legged robot 10 in Fig. 1.

The difference between the four-legged robot b, 10b in Fig. 2 and the four-legged robot 10 in Fig. 1 is a configuration of the leg 13. The configurations of the main body 11 and the sensor 12 are similar to those of the four-legged robot 10 in Fig. 1.

The four-legged robot 10 illustrated in Fig. 1 includes the rotary joint 14 and the linear motion joint 15 in the leg 13, but the four-legged robot b, 10b illustrated in Fig. 2 includes two rotary joints 14 and 17 in the leg 13.

Moreover, in the four-legged robot 10 illustrated in Fig. 1, the wheel part 16 is attached to a distal end portion of the leg 13, but in the four-legged robot b, 10b illustrated in Fig. 2, the wheel part 16 is not attached to a distal end portion of the leg 13, and a ground contact part 18 is attached.

The rotary joint 14 of the leg 13 of the four-legged robot b, 10b illustrated in Fig. 2 is a joint that drives the entire leg 13 to rotate in the front-rear direction. Moreover, the rotary joint 17 is a joint that drives only a lower leg region on the lower side of the leg 13 to rotate in the front-rear direction with respect to an upper leg region on the upper side.

Also in the four-legged robot b, 10b illustrated in Fig. 2, a data processing unit (control unit) in the four-legged robot b, 10b receives sensor detection information from the visual sensor 12 and analyzes the sensor detection information to recognize the surrounding environment of the robot.

For example, a position, a distance, a shape, and the like of an obstacle around the robot are analyzed using a captured image of a camera constituting the visual sensor 12 or detection information of a distance sensor such as LiDAR or TOF. Moreover, by using the obstacle analysis result, a safe travel route is determined so as to avoid the obstacle, and travel control of the robot is executed.

In order to move along the determined travel route, the data processing unit (control unit) in the robot controls the two rotary joints 14 and 17 of each leg 13 to operate the leg 13 and move the robot according to the determined safe travel route.

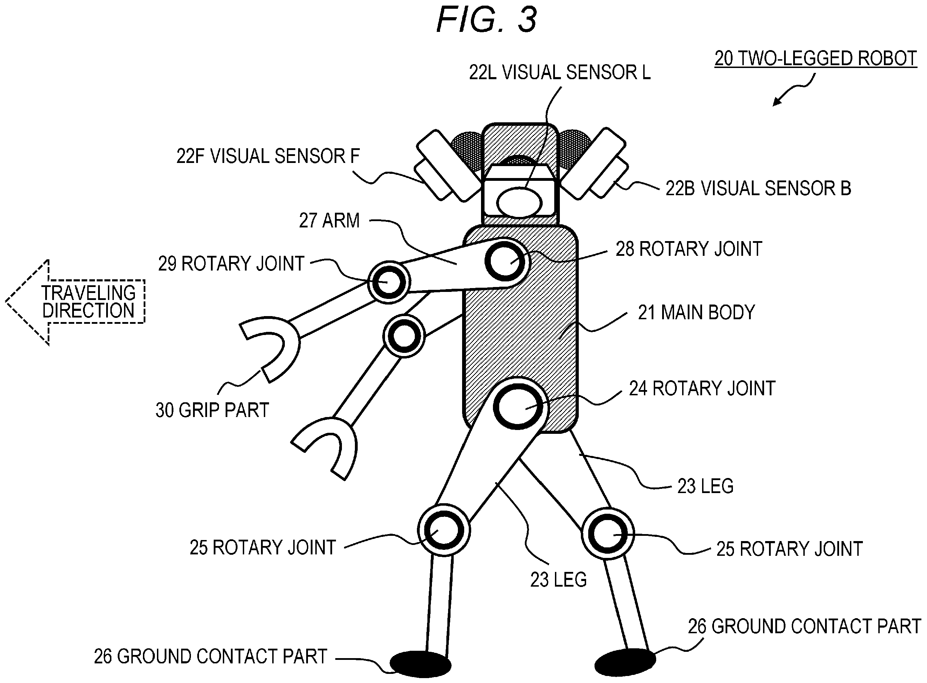

Fig. 3 is a diagram illustrating a two-legged robot 20 that is another example of the robot device of the present disclosure.

The two-legged robot 20 is a walking type robot that moves by moving two legs back and forth.

As illustrated in Fig. 3, the two-legged robot 20 includes a main body 21, a visual sensor 22 for recognizing the surrounding environment of the robot, a leg 23 for moving, and an arm 27.

In the configuration illustrated in Fig. 3, the visual sensor 22 includes the following four visual sensors that individually perform environment recognition in four directions of front, back, left, and right on the head of the two-legged robot 20.

Visual sensor F (Front) 22F for environment recognition in a robot traveling direction (forward direction);
Visual sensor B (Back) 22B for environment recognition in a backward direction;
Visual sensor L (Left) 22L for environment recognition in a left direction; and
Visual sensor R (Right) 22R for environment recognition in a right direction.

Note that the drawing does not illustrate the visual sensor R (Right) 22R for environment recognition in the right direction.

The visual sensor 22 is only required to have a configuration capable of acquiring information for checking an obstacle in the traveling direction, a situation of a ground contact surface of a foot, and the like, for example, three-dimensional shape information of surrounding objects, for the two-legged robot 20 to safely travel, and similar to what was described with reference to Fig. 1, for example, a stereo camera, an omnidirectional camera, a LiDAR, a TOF sensor, and the like can be used.

Note that, similar to what was described with reference to Fig. 1, the visual sensor is only required to be set to be able to acquire environment information (three-dimensional position and three-dimensional shape) around the two-legged robot 20, and for example, a configuration using one omnidirectional camera, a configuration using a combination of one omnidirectional camera and one LiDAR, or the like are also possible.

The leg 23 includes rotary joints 24 and 25 and a ground contact part 26.

The rotary joint 24 of the leg 23 of the two-legged robot 20 illustrated in Fig. 3 is a joint that rotationally drives the entire leg 23 in the front-rear direction. Moreover, the rotary joint 25 is a joint that drives only the lower leg on the lower side of the leg 23 to rotate in the front-rear direction with respect to the upper leg on the upper side.

Each of the rotary joints 24 and 25 includes, for example, an actuator, an encoder for detecting a position of the actuator, a speed reducer, a torque sensor for detecting torque on an output shaft side, and the like.

The arm 27 includes rotary joints 28 and 29 and a grip part 30.

The rotary joint 28 of the arm 27 is a joint that rotates and drives the entire arm 27 in the vertical direction. Moreover, the rotary joint 29 is a joint that rotationally drives only about a half arm region on a distal end side of the arm 27 in the vertical direction with respect to the arm region on a main body side.

The rotary joints 28 and 29 and the grip part 30 of the arm 27 also include, for example, an actuator, an encoder for detecting a position of the actuator, a speed reducer, a torque sensor for detecting torque on the output shaft side, and the like.

Also in the two-legged robot 20 illustrated in Fig. 3, a data processing unit (control unit) in the two-legged robot 20 receives sensor detection information from the visual sensor 22, analyzes the sensor detection information, and recognizes the surrounding environment of the robot.

For example, a position, a distance, a shape, and the like of an obstacle around the robot are analyzed using a captured image of a camera constituting the visual sensor 22 or detection information of a distance sensor such as LiDAR or TOF. Moreover, by using the obstacle analysis result, a safe travel route is determined so as to avoid the obstacle, and travel control of the robot is executed.

The data processing unit (control unit) in the robot controls the two rotary joints 24 and 25 of each leg 23 to operate the leg 23 and move the robot according to the travel route in order to move the determined travel route.

Moreover, a data processing unit (control unit) in the robot controls the two rotary joints 28 and 29 of each of the arms 27 to operate the arm 27, and causes the arm to execute various works.

Also in the motion control of the arm 27, the data processing unit (control unit) in the two-legged robot 20 receives and analyzes the sensor detection information from the visual sensor 22, analyzes the environment around the arm 27, and performs motion control so that the arm 27 does not collide with or come into contact with surrounding obstacles.

Note that, although a plurality of examples related to the robot device and the robot control method of the present disclosure will be described below, the configuration and processing of the present disclosure are not limited to the four-legged robots 10 and 10b, and the two-legged robot 20, and can also be applied to a wheel-driven robot, a caterpillar driven robot, and the like in addition to the above according to the examples.

Furthermore, the number of arms and legs can be variously set.

Note that hereinafter, example to which the four-legged robot 10 described with reference to Fig. 1 is applied will be described as a representative example of the robot device of the present disclosure.

A specific example of a case where the four-legged robot 10 illustrated in Fig. 1 autonomously travels will be considered.

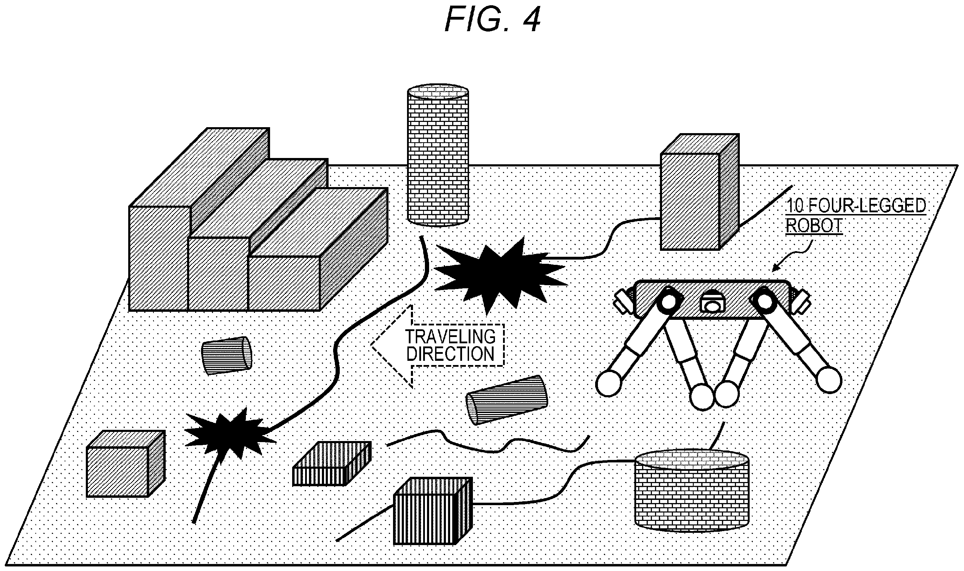

Fig. 4 is a diagram illustrating an example of an environment in which the four-legged robot 10 illustrated in Fig. 1 autonomously travels.

As an environment in which the four-legged robot 10 moves, for example, there are various obstacles as illustrated in Fig. 4, and a traveling surface is not limited to a flat surface, and there are various kinds such as a rough surface, a stepped surface, an inclined surface, and a stair.

For example, when the four-legged robot 10 collides with an obstacle, the four-legged robot 10 may fall down, and damage or failure may occur.

Furthermore, even in a case where the foot is grounded on a rough surface, a stepped surface, an inclined surface, or the like without considering an inclination angle or the like, there is a possibility that the four-legged robot 10 falls down and damage or failure occurs.

In order to prevent such a situation from occurring, a surrounding environmental map generated on the basis of sensor acquisition information acquired by a visual sensor such as a camera, that is, an environmental map having three-dimensional shape information of an object including the traveling surface around the robot is used.

For example, the data processing unit in the four-legged robot 10 analyzes acquisition information from a visual sensor such as a camera attached to the four-legged robot 10, analyzes the distance to an object including the traveling surface around the four-legged robot 10, generates an environmental map indicating the object distance including the traveling surface, and controls the moving direction and the grounding position of the leg with reference to the generated environmental map.

Examples of the environmental map having three-dimensional shape information of an object including the traveling surface around the robot includes a three-dimensional point cloud (PC).

The three-dimensional point cloud (PC) is a point cloud constituted by a large number of points indicating a three-dimensional position of an object surface.

The distance is generated on the basis of an object distance measured by a sensor such as a camera mounted on the robot.

The three-dimensional point cloud (PC) includes a large number of points indicating a three-dimensional position and a three-dimensional shape of the object surface, such as a traveling surface on which the robot travels, a column, and a wall. Each point constituting the three-dimensional point cloud (PC) is associated with coordinate $(x, y, z)$ position data in a three-dimensional space.

The three-dimensional shape of the object can be recognized on the basis of the coordinate position corresponding to each point of the three-dimensional point cloud (PC), and for example, the undulations and inclinations of the traveling surface of the robot, the position of the obstacle, and the like can be analyzed.

However, for example, depending on the operation status of the rotary joint 14 and the linear motion joint 15 of the leg 13, there is a case where a part of the leg 13 enters a sensor detection region of the visual sensor 12, for example, an imaging range of the camera.

In such a case, the data processing unit of the four-legged robot 10 may erroneously recognize the leg 13 as an obstacle and perform erroneous control such as stopping the four-legged robot 10.

The problem that a part of the robot is recognized as an obstacle from the analysis result of the sensor detection information of the visual sensor 12 and erroneous control is performed is a problem that occurs not only in the four-legged robot 10 illustrated in Fig. 1 but also in the four-legged robot b, 10b illustrated in Fig. 2 and the two-legged robot 20 illustrated in Fig. 3.

Moreover, in the case of the two-legged robot 20 illustrated in Fig. 3, depending on the operation status of the rotary joints 28 and 29 of the arm 27, a part of the arm 27 may enter the sensor detection region of the visual sensor 12, for example, the imaging range of the camera.

In such a case, the data processing unit of the two-legged robot 20 may erroneously recognize the arm 27 as an obstacle, and perform erroneous control such as stopping the work executed by operating the arm 27.

The robot device of the present disclosure solves such a problem.

[2. Overview of processing executed by robot device of present disclosure]

Next, an overview of processing executed by the robot device of the present disclosure will be described.

As described above, for example, when the four-legged robot 10 erroneously recognizes a part of the robot as an obstacle from the analysis result of the sensor detection information of the visual sensor 12, erroneous control may be performed.

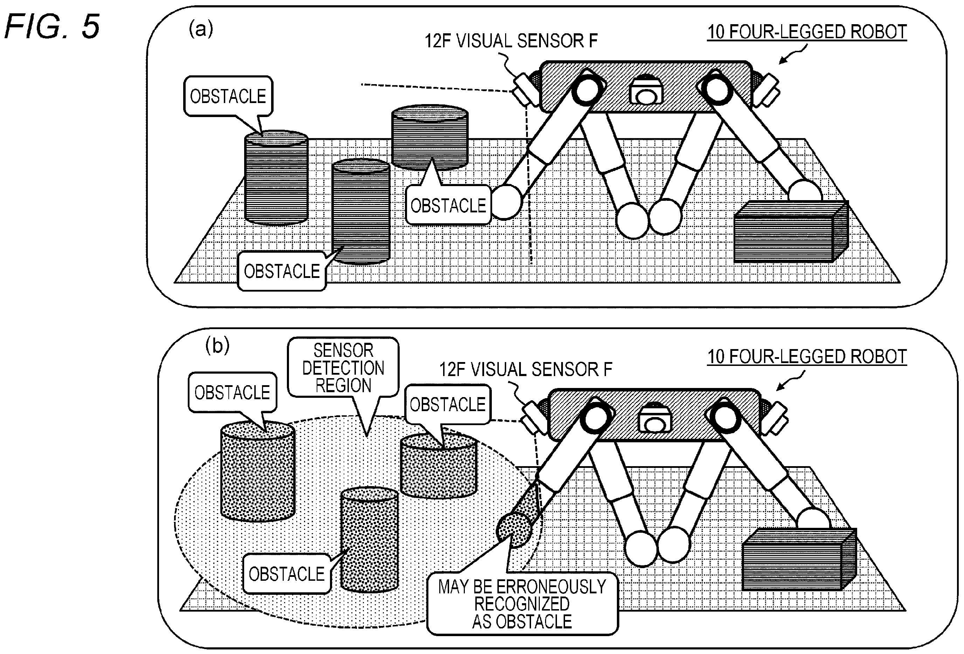

This specific example will be described with reference to Fig. 5.

Fig. 5(a) illustrates a state in which the four-legged robot 10 is traveling on a traveling road on which a plurality of obstacles is placed.

Fig. 5(b) illustrates a sensor detection region of the visual sensor F, 12F that detects an obstacle ahead in the traveling direction of the four-legged robot 10. For example, in a case where the visual sensor F, 12F is a camera, the sensor detection region is an imaging range of the camera. Furthermore, in a case where the visual sensor F, 12F is a distance sensor such as LiDAR and TOF sensors, it is a distance measurable range by these distance sensors.

In the sensor detection region of the visual sensor F, 12F illustrated in Fig. 5(b), there are three cylindrical obstacles.

Moreover, the sensor detection region of the visual sensor F, 12F illustrated in Fig. 5(b) include a partial area of the left front leg of the four-legged robot 10.

The data processing unit of the four-legged robot 10 analyzes the sensor detection information of the visual sensor F, 12F to confirm a position of the obstacle.

The data processing unit can analyze the positions, shapes, and distances of the three cylindrical obstacles illustrated in the drawing by analyzing the sensor detection information of the visual sensor F, 12F.

However, the data processing unit of the four-legged robot 10 further erroneously recognizes that a partial region of the left front leg of the four-legged robot 10 included in the sensor detection region of the visual sensor F, 12F is also an obstacle.

Due to this erroneous recognition, the data processing unit of the four-legged robot 10 determines that the left front leg of the four-legged robot 10 is in a state of colliding with or contacting with an obstacle, and performs control to stop the operation of the left front leg. As a result, the erroneous control such as stopping the operation of the four-legged robot 10 is performed.

In order to avoid such erroneous control, the robot device of the present disclosure executes processing (filter processing) for not recognizing a self-region of the robot such as a leg or an arm of the robot itself as an obstacle.

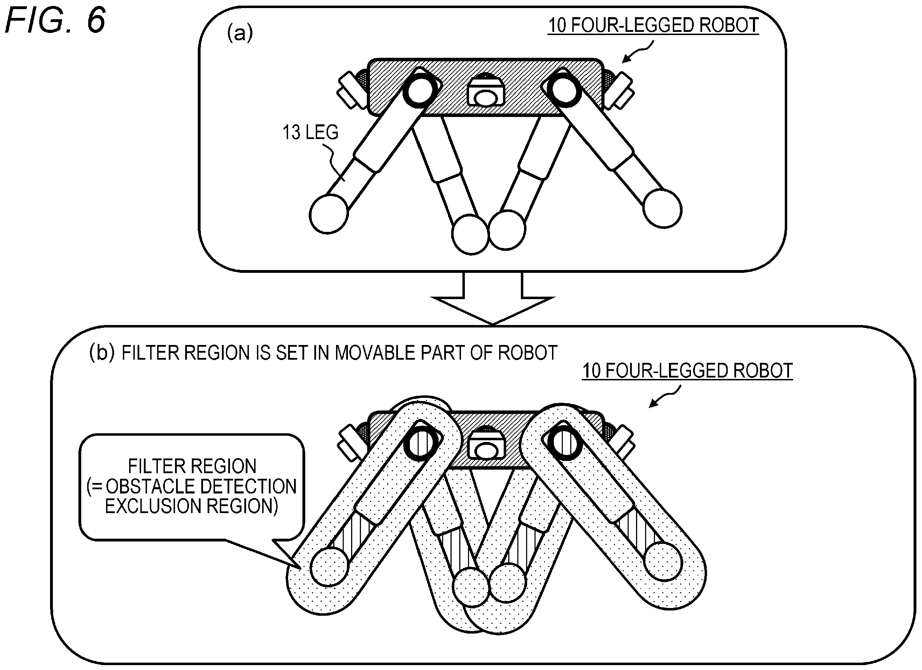

An overview of processing executed by the robot device of the present disclosure will be described with reference to Fig. 6 and subsequent drawings.

The data processing unit of the robot device of the present disclosure sets a filter region in a movable part such as a leg or an arm of the robot.

The filter region is a region where the object detection processing of an obstacle or the like is not executed, that is, an obstacle detection exclusion region.

For example, in a case where a filter region is included in the sensor detection region of the visual sensor, even in a case where an object such as some obstacle is detected in the filter region, filter processing is performed to determine that the object has not been detected.

Fig. 6(a) illustrates the four-legged robot 10. The filter region is set in the movable part of the four-legged robot 10, that is, the four legs 13.

Specifically, for example, the filter region is a filter region as illustrated in Fig. 6(b).

The filter region illustrated in Fig. 6(b) is a filter region set so as to surround the leg 13 and a peripheral region of the leg 13.

As described above, the filter region is set so as to include not only the region of the leg 13 but also the peripheral region of the leg 13.

This is in consideration of the movement of the leg 13.

By setting such a filter region, even in a case where an object such as an obstacle is detected in the filter region by the visual sensor, the filter processing is executed assuming that the object detected in the filter region is not detected.

As a result of this filter processing, the objects in the filter region, for example the legs of the robot, will not interfere with the subsequent operation of the robot.

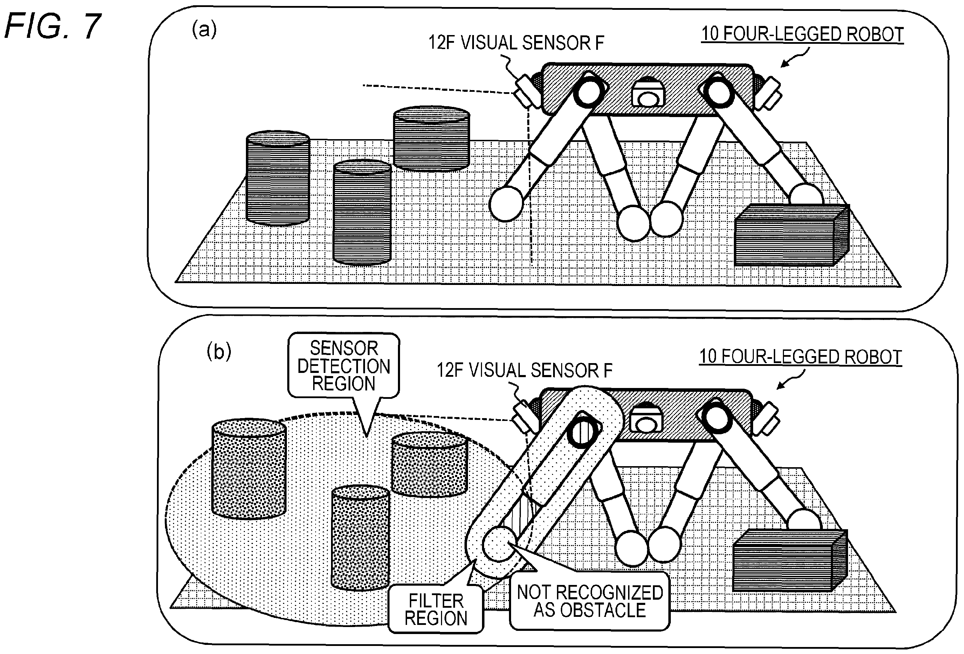

A specific example of processing executed by the data processing unit of the robot device of the present disclosure, that is, filter processing to which the filter region is applied will be described with reference to Fig. 7.

Fig. 7(a) illustrates a state in which the four-legged robot 10 is traveling on a traveling path on which a plurality of obstacles is placed, similarly to Fig. 5(a) described above.

Fig. 7(b) illustrates a sensor detection region of the visual sensor F, 12F that detects an obstacle ahead in the traveling direction of the four-legged robot 10, and a filter region set in the left front leg of the four-legged robot 10.

The filter region set for the left front leg of the four-legged robot 10 is set to overlap a part of the sensor detection region illustrated in Fig. 7(b).

As described above, for example, in a case where the visual sensor F, 12F is a camera, the sensor detection region is an imaging range of the camera. Furthermore, in a case where the visual sensor F, 12F is a distance sensor such as LiDAR and TOF sensors, it is a distance measurable range by these distance sensors.

The data processing unit of the four-legged robot 10 executes processing of detecting an object included in the sensor detection region of the visual sensor F, 12F.

As a result, three cylindrical obstacles illustrated in the drawing are detected. Moreover, a leg tip region of the left front leg of the four-legged robot 10 is also detected.

However, since the leg tip region of the left front leg of the four-legged robot 10 is within the filter region, the data processing unit executes the filtering processing assuming that the object in the leg tip region has not been detected.

That is, the data processing unit of the four-legged robot 10 does not recognize the leg tip of the left front leg of the four-legged robot 10 as an obstacle, and executes the subsequent operation.

As a result of these processes, the four-legged robot 10 can normally travel without being obstructed by its own leg tip.

In this manner, the robot device of the present disclosure sets the filter region in the movable part of the robot device, and executes processing of not recognizing the detection object in the filter region as the obstacle.

Note that the robot device of the present disclosure performs processing of setting a filter region in a movable part such as a leg or an arm of the robot device, and the filter region is set as a variable region having various sizes.

For example, in a case where the motion speed of the leg is high, a large size filter region is set in the leg. Furthermore, for example, in a case where the leg is stopped, a filter region having a small size is set in the leg.

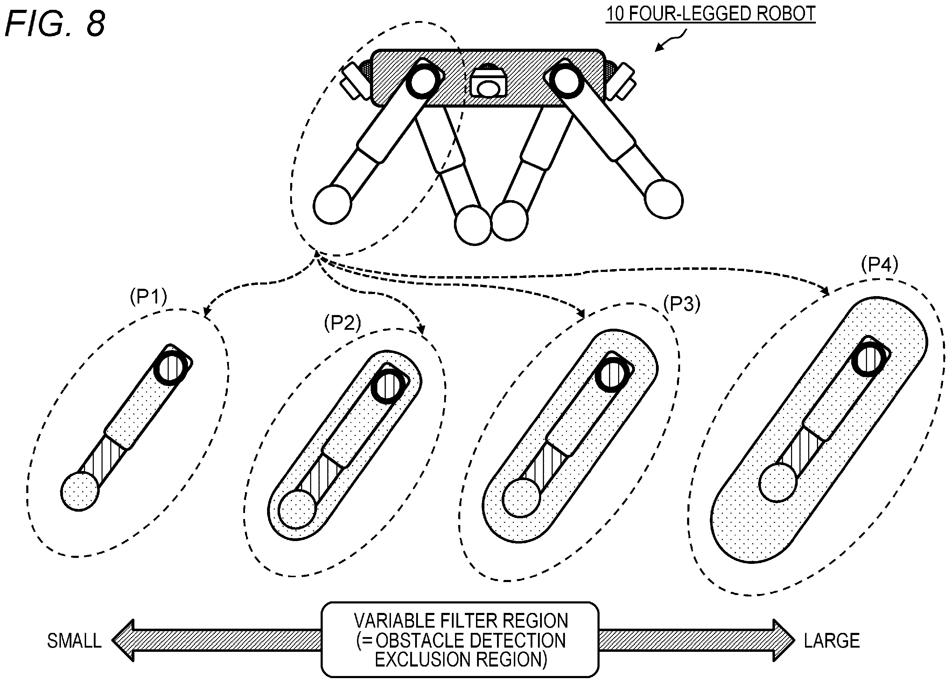

A specific example of a variable size fimeta region, that is, a variable filter region will be described with reference to Fig. 8.

Fig. 8 illustrates a plurality of setting examples of the variable filter region set to the left front leg of the four-legged robot 10.

This is a filter region setting example in which the filter region indicated by (P1) at the left end is the filter region having the minimum size and only the left front leg itself is the filter region.

The size of the filter region increases in the order of (P2), (P3), and (P4) on the right side of (P1).

For example, as the motion speed of the left front leg of the four-legged robot 10 increases, the size of the filter region increases as illustrated in (P2), (P3), and (P4).

The filter region indicated by (P4) at the right end is a filter region of the maximum size set in a case where the motion speed of the left front leg of the four-legged robot 10 is a speed higher than or equal to a specified threshold value.

Note that there are various setting modes of the filter region. Specific examples of these will be described later.

As described above, the robot device of the present disclosure sets the filter region in the movable part such as a leg or an arm of the own device, and executes processing of not recognizing the detection object in the filter region as the obstacle.

This processing prevents erroneous control by determining the components of the own device as an obstacle.

Hereinafter, a plurality of examples of a robot device and a robot control method of the present disclosure will be described.

[3. (Example 1) Details of robot device and robot control method of Example 1 of present disclosure]

First, details of a robot device and a robot control method according to Example 1 of the present disclosure will be described.

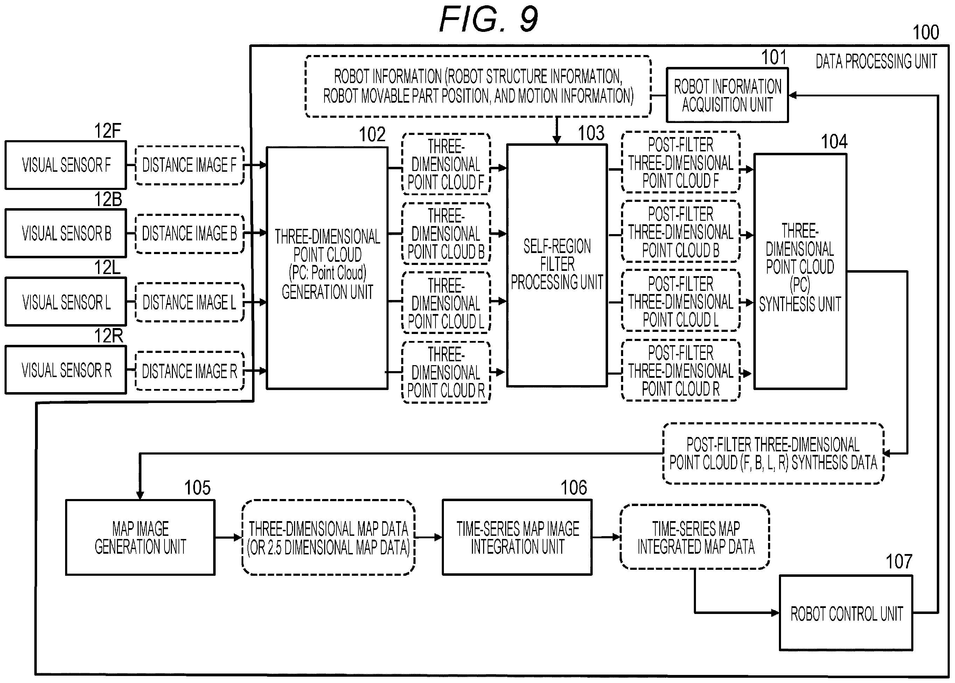

Fig. 9 is a diagram illustrating a main configuration of the robot device according to Example 1 of the present disclosure.

The configuration illustrated in Fig. 9 will be described focusing on, for example, a data processing unit that performs travel control processing of the four-legged robot 10 described with reference to Fig. 1.

The four visual sensors F to R, 12F to R illustrated in Fig. 9 are visual sensors such as stereo cameras attached to the front, back, left, and right of the four-legged robot 10 described with reference to Fig. 1.

Note that each of the four visual sensors F to R, 12F to R captures, for example, a distance image in which a density value corresponding to a distance to an object included in an imaging range (sensor detection region) of a camera constituting the visual sensor is set as a pixel value.

The distance image F illustrated in Fig. 9 is a distance image acquired by the visual sensor F, 12F that capture an image in the traveling direction (forward direction) of the four-legged robot 10.

The distance image B is a distance image acquired by the visual sensor B, 12B that captures an image in the backward direction opposite to the traveling direction of the four-legged robot 10.

The distance image L is a distance image acquired by the visual sensor L, 12L that captures an image in the left direction with respect to the traveling direction of the four-legged robot 10.

The distance image R is a distance image acquired by the visual sensor R (Right) 12R that captures an image in the right direction with respect to the traveling direction of the four-legged robot 10.

Note that, as illustrated in Fig. 1, the four visual sensors F, 12F to R, 12R all face obliquely downward, and the distance images acquired by the four visual sensors F, 12F to R, 12R are data mainly indicating, as pixel values, distance values of surrounding objects below the horizontal plane of the camera position of the four-legged robot 10. The distance images acquired by the four visual sensors F, 12F to R, 12R are images including the distance value of the traveling surface.

The four distance images acquired by the four visual sensor F, 12F to the visual sensor R, 12R are input to a three-dimensional point cloud (PC) generation unit 102 of a data processing unit 100.

Note that the data processing unit 100 is a data processing unit configured inside the four-legged robot 10. Alternatively, the data processing unit may be an external information processing apparatus capable of communicating with the four-legged robot 10, for example, a data processing unit configured as a cloud-side server or the like.

As illustrated in Fig. 9, the data processing unit 100 includes a robot information acquisition unit 101, a three-dimensional point cloud (PC) generation unit 102, a self-region filter processing unit 103, a three-dimensional point cloud (PC) synthesis unit 104, a map image generation unit 105, a time-series map image integration unit 106, and a robot control unit 107.

The robot information acquisition unit 101 acquires robot structure information (robot model information), a robot movable part position, and motion information, and outputs the robot structure information, the robot movable part position, and the motion information to the self-region filter processing unit 103.

The robot structure information (robot model information) is stored in a storage unit (not illustrated).

The robot movable part position and the motion information are acquired from the robot control unit 107 or acquired by using detection information of a sensor attached to the robot.

Note that the robot movable part is a leg, an arm, or the like of the robot.

The three-dimensional point cloud (PC) generation unit 102 generates a three-dimensional point cloud (PC) in which a distance value (pixel value) set to each pixel of each distance image is expressed as point cloud data on three-dimensional coordinates for each of the four distance images F to R, which are outputs of the four visual sensors, the visual sensors F, 12F to R, 12R.

Note that, as described above, each point constituting the three-dimensional point cloud (PC) is a point whose coordinate position on the xyz three-dimensional space is defined. That is, each coordinate value of x, y, and z is assigned to each point of the three-dimensional point cloud configuration.

As illustrated in Fig. 9, the three-dimensional point cloud (PC) generation unit 102 generates the following four three-dimensional point clouds and inputs them to the next-stage self-region filter processing unit 103.

(1) A three-dimensional point cloud F generated on the basis of the distance image F acquired by the visual sensor F, 12F;

(2) A three-dimensional point cloud B generated on the basis of the distance image B acquired by the visual sensor B, 12B;

(3) A three-dimensional point cloud L generated on the basis of the distance image L acquired by the visual sensor L, 12L; and

(4) A three-dimensional point cloud R generated on the basis of the distance image R acquired by the visual sensor R, 12R.

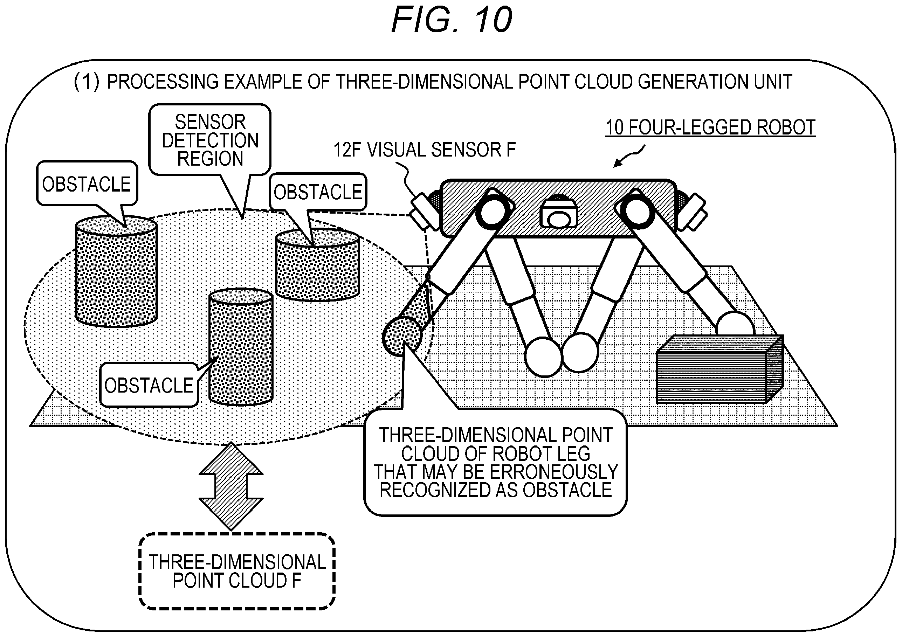

An example of processing executed by the three-dimensional point cloud (PC) generation unit 102 will be described with reference to Fig. 10.

Fig. 10 is a diagram for explaining an example of the three-dimensional point cloud F generated by the three-dimensional point cloud (PC) generation unit 102 on the basis of a distance image F that is the sensor detection information acquired by the visual sensor 12F of the four-legged robot 10.

Fig. 10 illustrates a sensor detection region of the visual sensor 12F of the four-legged robot 10.

The visual sensor 12F of the four-legged robot 10 generates the distance image F indicating the distance of the object in the sensor detection region illustrated in Fig. 10, and outputs the distance image F to the three-dimensional point cloud (PC) generation unit 102.

For example, the sensor detection region illustrated in Fig. 10 includes three cylindrical objects and a distal end portion of the left front leg of the four-legged robot 10.

The distance image F generated by the visual sensor 12F is a distance image F in which the distances (distance from visual sensor F, 12F) between these three cylindrical objects and the distal end portion of the left front leg of the four-legged robot 10 and the traveling surface are indicated as grayscale pixel values.

On the basis of the distance image F indicating the distance of the object in the sensor detection region illustrated in Fig. 10, the three-dimensional point cloud (PC) generation unit 102 generates a three-dimensional point cloud F expressing the distance value (pixel value) set to each pixel of the distance image F as point cloud data on three-dimensional coordinates.

At this point, the filter processing to which the filter region described above with reference to Figs. 6 to 8 is applied is not executed, and the three-dimensional point cloud F generated by the three-dimensional point cloud (PC) generation unit 102 is set as a point cloud of objects corresponding to obstacles in which neither the three cylindrical objects nor a distal end portion of the left front leg of the four-legged robot 10 is distinguished.

In Fig. 10, only the three-dimensional point cloud F generated by the three-dimensional point cloud (PC) generation unit 102 has been described. However, as illustrated in Fig. 9, the three-dimensional point cloud (PC) generation unit 102 generates four three-dimensional point clouds F to R on the basis of the distance images F to R acquired by the four visual sensors 12F to R, and outputs the four three-dimensional point clouds F to R to the self-region filter processing unit 103.

Next, processing executed by the self-region filter processing unit 103 will be described.

The self-region filter processing unit 103 executes self-region filtering processing of removing object information corresponding to a component (a leg, an arm, or the like) of the robot from the object information included in the detection information of the visual sensor 12.

As illustrated in Fig. 9, the self-region filter processing unit 103 inputs the following data.

(a) Robot structure information (robot model information) output from the robot information acquisition unit 101, and robot movable part position and motion information; and
(b) Four three-dimensional point clouds F to R generated by the three-dimensional point cloud (PC) generation unit 102.

The self-region filter processing unit 103 receives inputs of these pieces of data, generates four post-filter third order point clouds F to R, and outputs the four post-filter third order point clouds F to R to the three-dimensional point cloud (PC) synthesis unit 104.

Note that the post-filter third order point clouds are three-dimensional point cloud data obtained by removing the three-dimensional point cloud of the object corresponding to the region of the robot itself, which is the self-region, from the three-dimensional point cloud generated by the three-dimensional point cloud (PC) generation unit 102, that is, by performing filter processing.

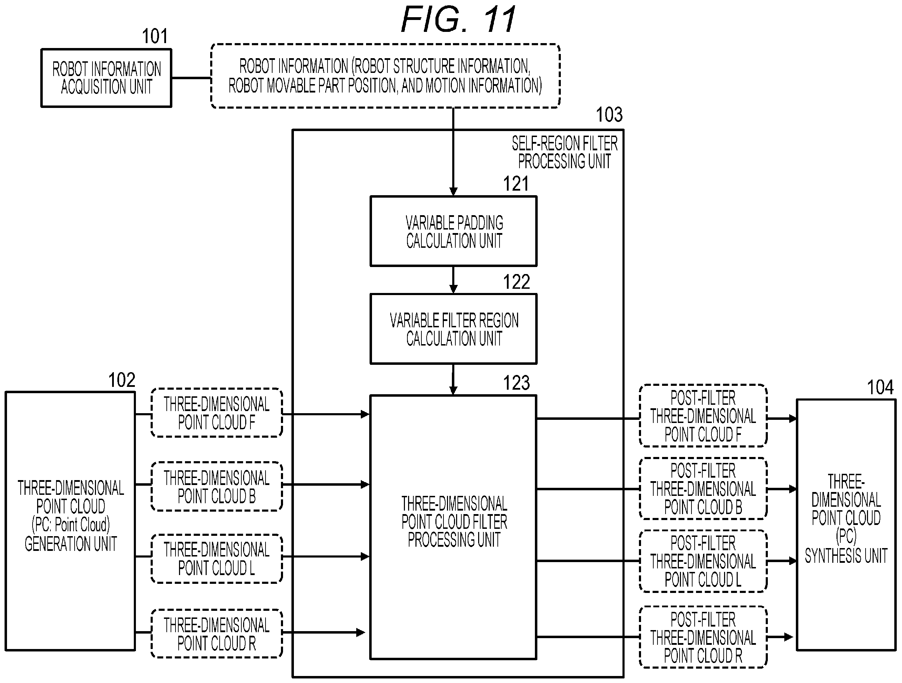

The detailed configuration and processing of the self-region filter processing unit 103 will be described in detail with reference to Fig. 11 and subsequent drawings.

Fig. 11 is a diagram illustrating a detailed configuration of the self-region filter processing unit 103.

As illustrated in Fig. 11, the self-region filter processing unit 103 includes a variable padding calculation unit 121, a variable filter region calculation unit 122, and a three-dimensional point cloud filter processing unit 123.

The variable padding calculation unit 121 receives the robot structure information, the position of the movable part of the robot, and the motion information from the robot information acquisition unit 101, and calculates the size of the padding portion as the size adjustment region of the variable filter according to the motion speed of the movable part of the robot.

The variable filter region calculation unit 122 calculates a filter region in which the padding calculated by the variable padding calculation unit 121 is set, that is, a variable filter region.

As described above, the variable filter region is a region in which an object in the region is not recognized as an obstacle.

The three-dimensional point cloud filter processing unit 123 applies the variable filter region calculated by the variable filter region calculation unit 122 to execute filter processing of removing an object-corresponding three-dimensional point cloud in the filter region from the three-dimensional point clouds F to R generated by the three-dimensional point cloud (PC) generation unit 102, and generates and outputs a new three-dimensional point cloud, that is, post-filter three-dimensional point clouds F to R to the next-stage three-dimensional point cloud (PC) synthesis unit 104.

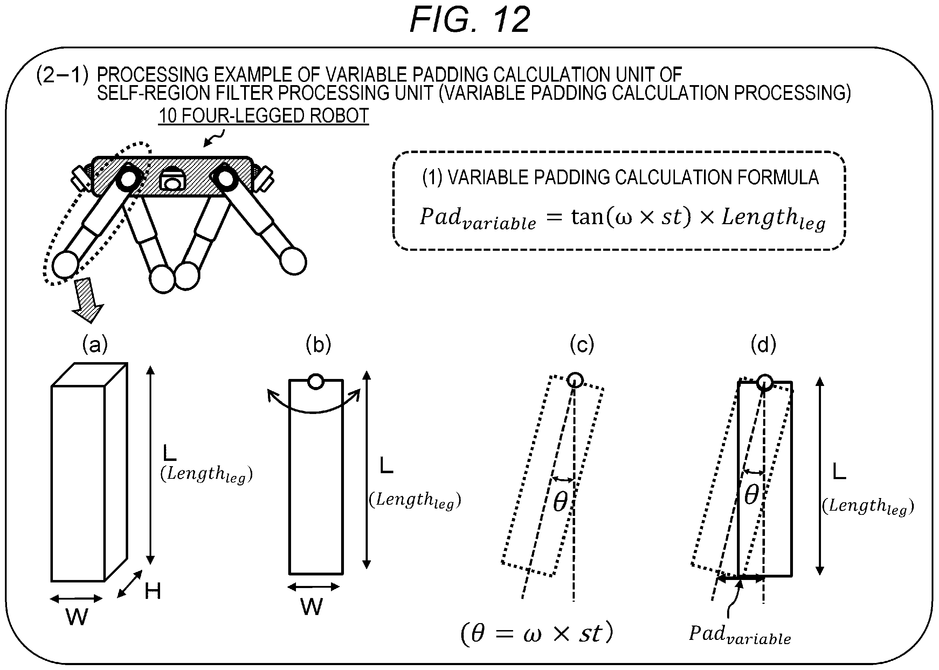

Specific examples of processing executed by each of the variable padding calculation unit 121, the variable filter region calculation unit 122, and the three-dimensional point cloud filter processing unit 123 constituting the self-region filter processing unit 103 will be described with reference to Fig. 12 and subsequent drawings.

First, a specific example of processing executed by the variable padding calculation unit 121 will be described with reference to Fig. 12.

As described above, the variable padding calculation unit 121 inputs the robot structure information, the position of the robot movable part, and the motion information from the robot information acquisition unit 101, and calculates the size of the padding portion as a size adjustment region of the variable filter according to the motion speed of the movable part of the robot.

Fig. 12 is a specific example of processing executed by the variable padding calculation unit 121, and is a diagram illustrating a calculation processing example of variable padding set to the left front leg of the four-legged robot 10.

Note that, in Fig. 12, the shape of the left front leg of the four-legged robot 10 is simplified as a quadrangular prism for easy understanding of the calculation processing of variable padding.

As illustrated in Fig. 12(a), the shape of the left front leg is illustrated as a quadrangular prism of $L \times W \times H$ with a length ($L(Length_{leg})$), a width (W) in the front-back direction, and a depth (H) in the left-right direction.

The $L \times W \times H$ quadrangular prism is, for example, a quadrangular prism including the left front leg of the four-legged robot 10.

As illustrated in Fig. 12(b), the legs of the four-legged robot 10 are configured to pivot in the front-back direction (W direction).

Fig. 12(c) is a diagram illustrating an operation state of the left front leg of the four-legged robot 10 at a certain timing (time (t)) when the variable padding calculation unit 121 executes the variable padding calculation processing.

Fig. 12(c) illustrates a state in which the left front leg of the four-legged robot 10 rotates by an angle ($\theta$) per

unit time (st) at the timing (time (t)).

The unit time (st) corresponds to, for example, an interval of the variable padding calculation processing executed by the variable padding calculation unit 121, that is, a sampling time interval.

Note that the motion state information such as the motion speed of the leg is input from the robot information acquisition unit 101 to the variable padding calculation unit 121 of the self-region filter processing unit 103.

Note that, in a case where the angular velocity of the left front leg of the four-legged robot 10 at the timing (time (t)) when the variable padding calculation unit 121 executes the variable padding calculation process is $\omega$, the angle ($\theta$) described above is calculated according to the following formula.

$$\theta = \omega \times st$$

provided that

$\omega$ = angular velocity
st = prescribed unit time (for example, sampling time interval)

Fig. 12(d) is a diagram illustrating a calculation example of a variable padding ($Pad_{variable}$) of the left front leg of the four-legged robot 10 at time (t).

The variable padding ($Pad_{variable}$) of the left front leg of the four-legged robot 10 at the time (t) is as illustrated in Fig. 12(d).

$$Pad_{variable} = \tan(\theta) \times Length_{leg} \dots \text{ (Formula 1)}$$

It is calculated according to the formula (Formula 1) described above.

As described above, in a case where the angular velocity of the left front leg of the four-legged robot 10 at the timing (time (t)) when the variable padding calculation unit 121 executes the variable padding calculating process is $\omega$,

$$\theta = \omega \times st$$

Therefore, the formula (Formula 1) described above can be expressed as the following formula (Formula 2) using the angular velocity ($\omega$).

$$Pad_{variable} = \tan(\omega \times st) \times Length_{leg} \dots \text{ (Formula 2)}$$

provided that

$\omega$ = angular velocity
st = prescribed unit time (for example, sampling time interval)

As shown in the formula (Formula (2)) described above, the variable padding of the leg that rotates is approximately proportional to the rotation speed, that is, the angular velocity ($\omega$), and is calculated as a value proportional to the length L($Length_{leg}$) of the leg.

That is, when the angular velocity ($\omega$) is large, the variable padding ($Pad_{variable}$) becomes a large value, and when the angular velocity ($\omega$) is small, the variable padding ($Pad_{variable}$) also becomes a small value.

The variable padding calculation unit 121 executes the variable padding ($Pad_{variable}$) calculation processing according to the processing described above with reference to Fig. 12.

The value of the variable padding ($Pad_{variable}$) calculated by the variable padding calculation unit 121 is output to the variable filter region calculation unit 122.

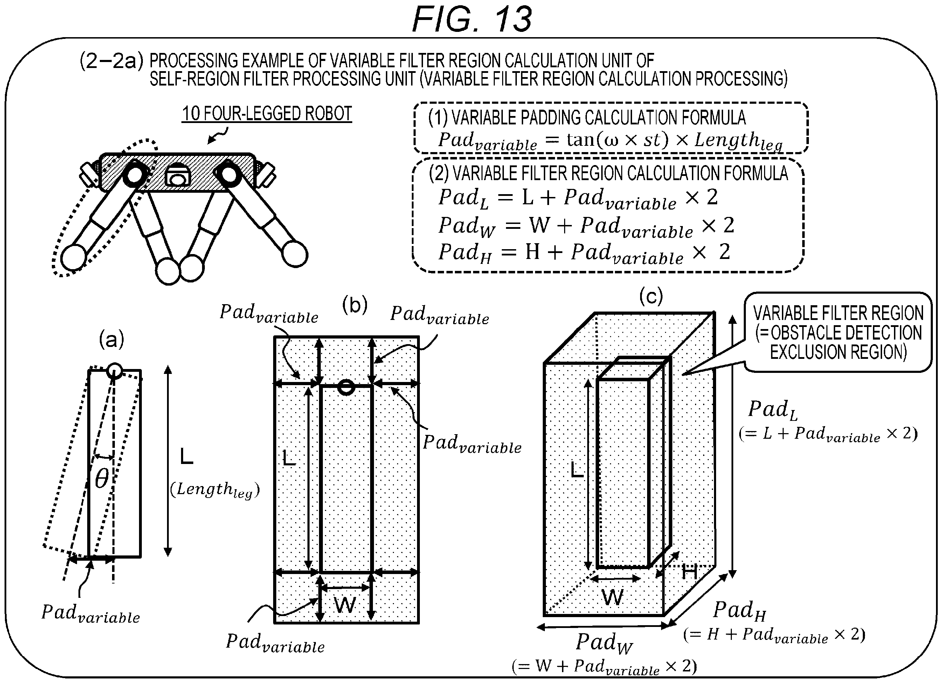

Next, a specific example of the variable filter region calculation processing executed by the variable filter region calculation unit 122 will be described with reference to Fig. 13 and subsequent drawings.

Fig. 13(a) is a diagram similar to Fig. 12(d) described above, and is a diagram illustrating an example of variable padding ($Pad_{variable}$) calculation processing of the left front leg of the four-legged robot 10.

That is a diagram illustrating an example of variable padding ($Pad_{variable}$) calculation processing by the variable padding calculation unit 121. The variable padding ($Pad_{variable}$) is calculated according to the following formula (Formula 2) as described above.

$$Pad_{variable} = \tan(\omega \times st) \times Length_{leg}\ldots \text{ (Formula 2)}$$

provided that

ω = angular velocity
st = prescribed unit time (for example, sampling time interval)

Fig. 13(b) is a diagram illustrating a specific example of the variable filter region calculation processing executed by the variable filter region calculation unit 122.

Fig. 13(b) is a diagram illustrating variable filter regions in an L direction and a W direction on an LW plane.

The filter region in the length direction (L direction) of the leg is a region obtained by adding variable padding ($Pad_{variable}$) to each of two end portions in the length direction of the leg, that is, the upper end portion and the lower end portion, to the length (L) of the leg.

In a case where the length of the filter region in the length direction (L direction) of the leg is $Pad_L$, the variable filter region calculation unit 122 calculates $Pad_L$ by the following formula.

$$Pad_L = L + (Pad_{variable}) \times 2$$

Similarly, the filter region in the front-back direction (W direction) of the leg is a region obtained by adding variable padding ($Pad_{variable}$) to each of two end portions in the front-back direction of the leg, that is, the front end portion and the rear end portion, to the front-back width (W) of the leg.

In a case where the length of the filter region in the front-back direction (W direction) of the leg is $Pad_W$, the variable filter region calculation unit 122 calculates $Pad_W$ by the following Formula.

$$Pad_W = W + (Pad_{variable}) \times 2$$

Fig. 13(c) is a diagram illustrating a variable filter region extending in the L direction, the W direction, and an H direction in an LWH three-dimensional space.

A variable filter region in a three-dimensional space is illustrated in which a variable filter region in the H direction is added to variable filter regions in the L direction and the W direction on the LW plane illustrated in Fig. 13(b).

As illustrated in Fig. 13(c), the filter region in the left-right direction (H direction) of the leg is a region in which variable padding ($Pad_{variable}$) is added to two end portions in the left-right direction of the leg, that is, each of the left end portion and the right end portion, in the left-right depth (H) of the leg.

In a case where the length of the filter region in the left-right direction (H direction) of the leg is $Pad_H$, the variable filter region calculation unit 122 calculates $Pad_H$ by the following Formula.

$$Pad_H = H + (Pad_{variable}) \times 2$$

In a case where the shape of the left front leg of the four-legged robot 10 is a quadrangular prism of L × W × H with a length ($L(Length_{leg})$), a width (W) in the front-back direction, and a depth (H) in the left-right direction, the variable filter region calculation unit 122 calculates a variable filter region including the quadrangular prism of the length ($Pad_L$), the width ($Pad_W$) in the front-back direction, and the depth ($Pad_H$) in the left-right direction as illustrated in Fig. 13(c).

The variable filter region calculated by the variable filter region calculation unit 122 is a quadrangular prism including three sides having a length calculated according to the following formula (Formula 3).

$$Pad_L = L + (Pad_{variable}) \times 2$$

$$Pad_W = W + (Pad_{variable}) \times 2$$

$$Pad_H = H + (Pad_{variable}) \times 2$$

$$\ldots \text{ (Formula 3)}$$

provided that

L, W, and H are lengths of three axes of a rectangular parallelepiped enclosing a movable part for setting a variable filter region.

Note that as described above, variable padding ($Pad_{variable}$) is a value calculated according to the following formula (Formula 2).

$$Pad_{variable} = \tan(\omega \times st) \times Length_{leg}... \quad (Formula\ 2)$$

provided that

$\omega$ = angular velocity
st = prescribed unit time (for example, sampling time interval)

The value of the variable padding ($Pad_{variable}$) increases as the angular velocity ($\omega$) increases, and decreases as the angular velocity ($\omega$) decreases.

Therefore, the size of the variable filter region calculated by (Formula 3) described above also becomes larger as the angular velocity ($\omega$) is larger, and becomes smaller as the angular velocity ($\omega$) is smaller.

That is, the variable filter region is a region whose size changes according to the motion speed of the movable part such as the leg.

Fig. 13 illustrates an example of the filter region calculation processing in which the shape of the leg portion is assumed to be a quadrangular prism. However, the leg portion of the four-legged robot 10 actually has a rounded shape instead of a quadrangular prism.

Therefore, the variable filter region section calculation unit 122 actually calculates a variable filter region having a rounded shape according to the shape of the leg.

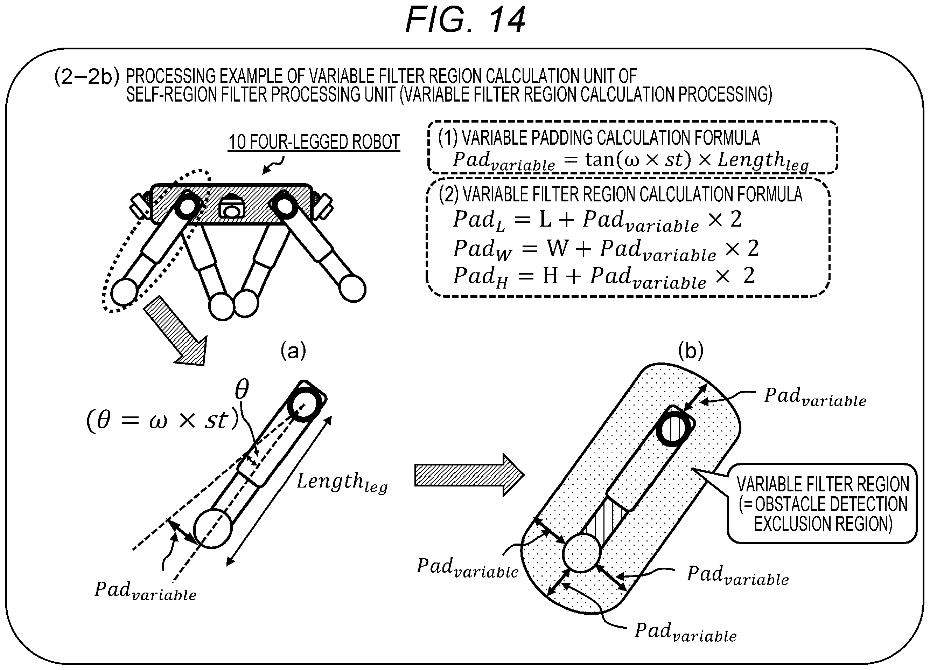

Fig. 14 is a diagram illustrating an example of a variable filter region having a rounded shape according to the shape of the leg calculated by the variable filter region section calculation unit 122.

Fig. 14(a) is a diagram illustrating a calculation example of the variable padding ($Pad_{variable}$) of the left front leg of the four-legged robot 10 at the time (t) similar to what was described above with reference to Fig. 12(d).

The variable padding ($Pad_{variable}$) of the left front leg of the four-legged robot 10 at time (t) is calculated as follows:

$$Pad_{variable} = \tan(\omega \times st) \times Length_{leg}... \quad (Formula\ 2)$$

provided that

$\omega$ = angular velocity
st = prescribed unit time (for example, sampling time interval)

It is calculated according to the formula (Formula 2) described above.

Fig. 14(b) illustrates an example of the variable padding region calculated using the calculated variable padding ($Pad_{variable}$).

Fig. 14 (b) illustrates variable filter regions in the L direction and the W direction on the LW plane.

The filter region in the length direction (L direction) of the leg is a region obtained by adding variable padding ($Pad_{variable}$) to each of two end portions in the length direction of the leg, that is, the upper end portion and the lower end portion, to the length (L) of the leg.

Similarly, the filter region in the front-back direction (W direction) of the leg is a region obtained by adding variable padding ($Pad_{variable}$) to each of two end portions in the front-back direction of the leg, that is, the front end portion and the rear end portion, to the front-back width (W) of the leg.

Moreover, although not illustrated in Fig. 14(b), the filter region in the left-right direction (H direction) of the leg is a region obtained by adding variable padding ($Pad_{variable}$) to each of two end portions in the left-right direction of the leg, that is, the left end portion and the right end portion, in the left-right depth (H) of the leg.

That is, the variable filter region calculated by the variable filter region calculation unit 122 is a rounded region in which the maximum length in each direction of the LWH has a length calculated according to the following formula (Formula 3) described above.

$$Pad_L = L + (Pad_{variable}) \times 2$$

$$Pad_W = W + (Pad_{variable}) \times 2$$

$$Pad_H = H + (Pad_{variable}) \times 2$$

$$.... \quad (Formula \ 3)$$

provided that

L, W, and H are lengths of three axes of a rectangular parallelepiped enclosing a movable part for setting a variable filter region.

As described above, the size of the variable filter region calculated by (Formula 3) described above also becomes larger as the angular velocity ($\omega$) is larger, and becomes smaller as the angular velocity ($\omega$) is smaller. That is, the variable filter region is a region whose size changes according to the motion speed of the movable part such as the leg.

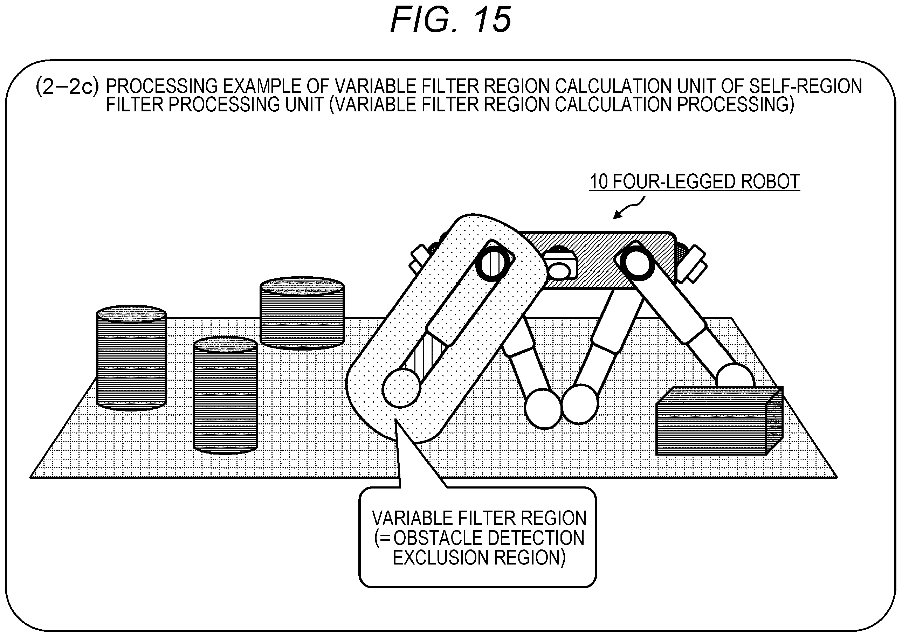

Fig. 15 illustrates a view in which the variable filter region calculated by the variable filter region calculation unit 122 is set in the left front leg of the four-legged robot 10.

The variable filter region is a region that does not recognize an object as an obstacle even if the object is detected in the region.

The region information of the variable filter region calculated by the variable filter region calculation unit 122 is output to the three-dimensional point cloud filter processing unit 123 of the self-region filter processing unit 103 illustrated in Fig. 11.

The three-dimensional point cloud filter processing unit 123 applies the variable filter region calculated by the variable filter region calculation unit 122 to execute filter processing of removing an object-corresponding three-dimensional point cloud in the filter region from the three-dimensional point clouds F to R generated by the three-dimensional point cloud (PC) generation unit 102, and generates and outputs a new three-dimensional point cloud, that is, post-filter three-dimensional point clouds F to R to the next-stage three-dimensional point cloud (PC) synthesis unit 104.

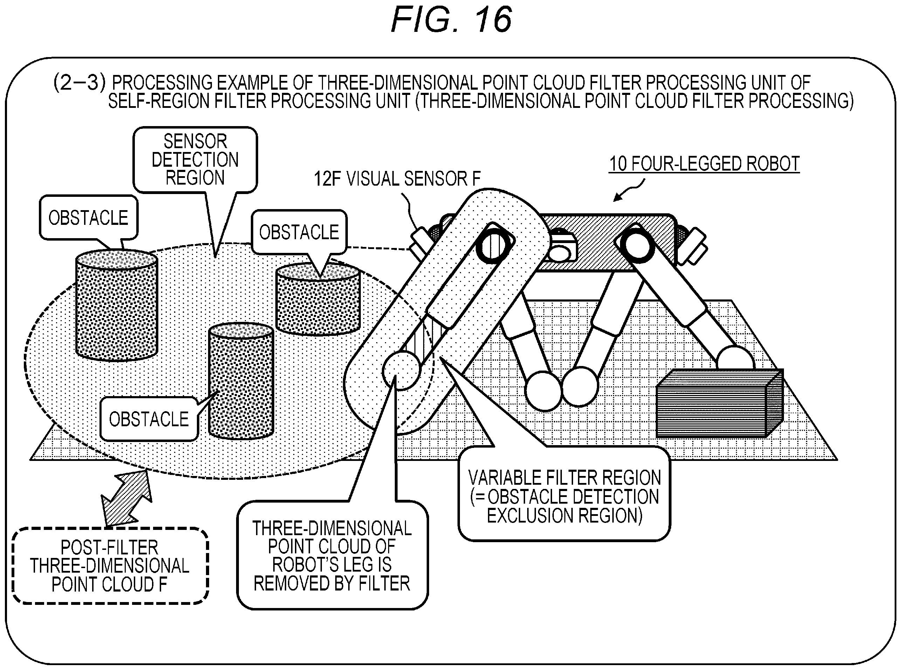

A specific example of this processing will be described with reference to Fig. 16.

Fig. 16 is a diagram illustrating an example of the post-filter three-dimensional point cloud F generated by the three-dimensional point cloud filter processing unit 123.

That is, an example of the post-filter three-dimensional point cloud F in the sensor detection region of the visual sensor 12F of the four-legged robot 10 is illustrated.

As described above with reference to Fig. 9, the three-dimensional point cloud F is input to the three-dimensional point cloud filter processing unit 123 from the three-dimensional point cloud (PC) generation unit 102 in the preceding stage.

As described above with reference to Fig. 10, the three-dimensional point cloud F is the three-dimensional point cloud F generated by the three-dimensional point cloud (PC) generation unit 102, and includes an object in the sensor detection region, that is, a three-dimensional point cloud indicating three cylindrical objects and an object at a distal end portion of the left front leg of the four-legged robot 10.

The three-dimensional point cloud filter processing unit 123 applies the variable filter region calculated by the variable filter region calculation unit 122 to the three-dimensional point cloud F generated by the three-dimensional point cloud (PC) generation unit 102, and executes filter processing of removing the object-corresponding three-dimensional point cloud in the filter region.

In the example illustrated in Fig. 16, the removal processing of the three-dimensional point cloud corresponding to the object in the filter region including the front leg of the four-legged robot 10 and the peripheral region thereof is performed. That is, filter processing of removing the three-dimensional point cloud corresponding to the front leg of the four-legged robot 10 is performed to generate a new three-dimensional point cloud, that is, the post-filter three-dimensional point cloud F.

In the post-filter three-dimensional point cloud illustrated in Fig. 16, the three-dimensional point cloud corresponding to the three cylindrical objects is left as it is, but the three-dimensional point cloud corresponding to the object at the distal end portion of the left front leg of the four-legged robot 10 is data from which the three-dimensional point cloud corresponding to the object is deleted.

As described above, the three-dimensional point cloud filter processing unit 123 executes the processing (filter processing) of deleting the object-corresponding three-dimensional point cloud in the variable filter region calculated by the variable filter region calculation unit 122 from the three-dimensional point cloud input from the three-dimensional point cloud (PC) generation unit 102 in the previous stage to generate the filtered three-dimensional point cloud.

The filtered three-dimensional point cloud generated by the three-dimensional point cloud filter processing unit 123 is output to the subsequent three-dimensional point cloud synthesis unit 104.

Note that, in Figs. 14 to 16, the calculation processing of the variable filter region of the left front leg of the four-legged robot 10 and the generation processing of the post-filter three-dimensional point cloud data by the filter processing to which the variable filter region of the left front leg is applied have been described.

The self-region filter processing unit 103 executes the processing of calculating the variable filter region and the processing of generating the post-filter three-dimensional point cloud data by the filter processing to which the variable filter region is applied for all the movable parts of the four-legged robot 10, specifically, for each of the four legs.

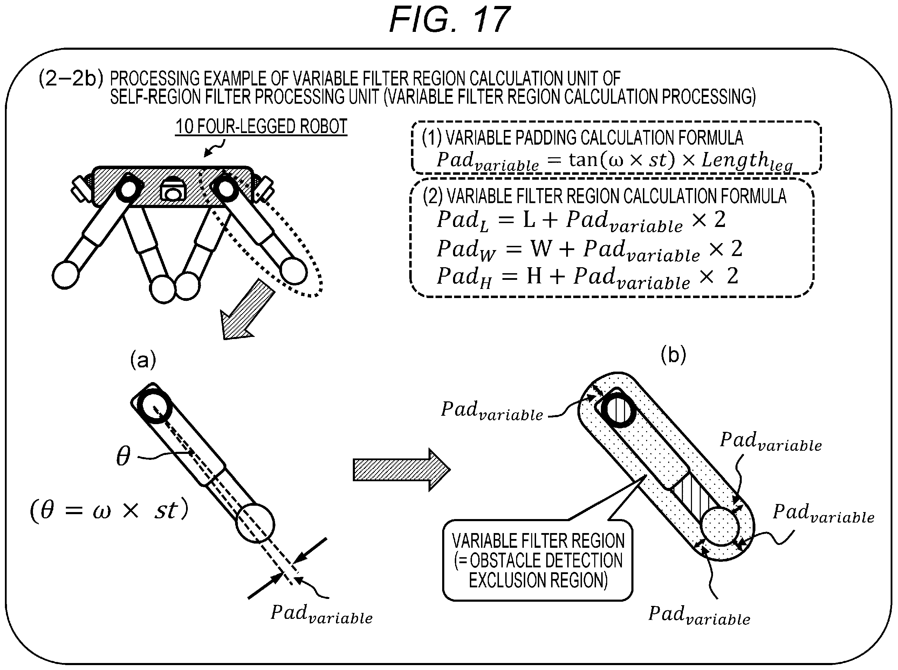

A processing example for the leg other than the left front leg will be described with reference to Fig. 17.

Fig. 17 is a diagram illustrating calculation processing of the variable filter region corresponding to the left rear leg of the right leg robot 10.

Fig. 17(a) is a diagram illustrating a calculation example of a variable padding ($Pad_{variable}$) of the left back leg of the four-legged robot 10 at time (t).

The variable padding ($Pad_{variable}$) of the left back leg of the four-legged robot 10 at the time (t) is calculated according to the above described formula (Formula 2). That is,

$$Pad_{variable} = \tan (\omega \times st) \times Length_{leg} \dots (Formula\ 2)$$

provided that

$\omega$ = angular velocity
st = prescribed unit time (for example, sampling time interval)

Calculation is performed according to the formula (Formula 2) described above.

In the example illustrated in Fig. 17, the motion of the left rear leg of the four-legged robot 10 at the timing (time (t)) corresponding to the variable padding calculation processing time by the variable padding calculation unit 121 is in a state of rotating by an angle ($\theta$) per unit time (st).

This rotation angle is considerably smaller than the rotation angle of the left front leg described above with reference to Fig. 14.

That is, the angular velocity (w) is a small value, and as a result, the value of the variable padding ($Pad_{variable}$) calculated according to (Formula 2) described above is also a small value.

Fig. 17(b) illustrates an example of the variable padding region calculated using the variable padding ($Pad_{variable}$) calculated according to (Formula 2) described above.

That is, it is the variable filter region of the left rear leg calculated by the variable filter region calculation unit 122.

Fig. 17(b) illustrates variable filter regions in the L direction and the W direction on the LW plane.

The filter region in the length direction (L direction) of the leg is a region obtained by adding variable padding ($Pad_{variable}$) to each of two end portions in the length direction of the leg, that is, the upper end portion and the lower end portion, to the length (L) of the leg.

Similarly, the filter region in the front-back direction (W direction) of the leg is a region obtained by adding variable padding ($Pad_{variable}$) to each of two end portions in the front-back direction of the leg, that is, the front end portion and the rear end portion, to the front-back width (W) of the leg.

Moreover, although not illustrated in Fig. 17(b), the filter region in the left-right direction (H direction) of the leg is a region obtained by adding variable padding ($Pad_{variable}$) to each of two end portions in the left-right direction of the leg, that is, the left end portion and the right end portion, in the left-right depth (H) of the leg.

That is, the variable filter region calculated by the variable filter region calculation unit 122 is a rounded region in which the maximum length in each direction of the LWH has a length calculated according to the following formula (Formula 3) described above.

$$Pad_L = L + (Pad_{variable}) \times 2$$
$$Pad_W = W + (Pad_{variable}) \times 2$$
$$Pad_H = H + (Pad_{variable}) \times 2$$
$$\dots (Formula\ 3)$$

provided that
L, W, and H are lengths of three axes of a rectangular parallelepiped enclosing a movable part for setting a variable filter region.

As described above, the size of the variable filter region calculated by (Formula 3) described above also becomes larger as the angular velocity (w) is larger, and becomes smaller as the angular velocity (w) is smaller.

The variable filter region corresponding to the left rear leg of the four-legged robot 10 illustrated in Fig. 17 is a region smaller than the variable filter region corresponding to the left front leg of the four-legged robot 10 described above with reference to Fig. 14.

This is because the angular velocity of the left rear leg of the four-legged robot 10 is smaller than the angular velocity of the left front leg, and the value of variable padding (Pad$_{variable}$) calculated as a result is different.

As described above, the variable filter region is a region having a different size depending on the motion speed of the movable part such as the leg for setting the variable filter region.

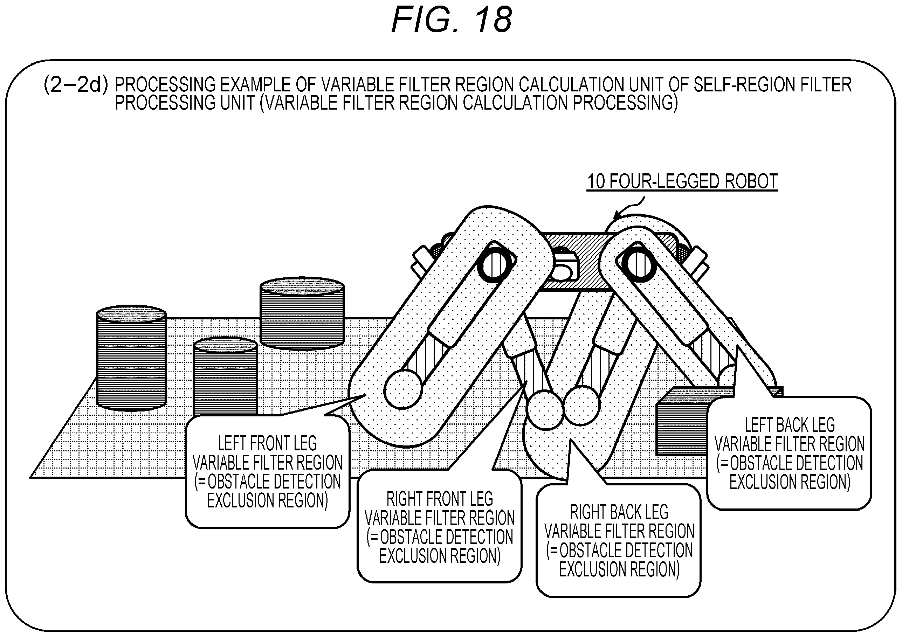

Fig. 18 illustrates an example of the variable filter region corresponding to each of the four legs of the four-legged robot 10 calculated by the variable filter region calculation unit 122 of the self-region filter processing unit 103.

Since the motion speed, that is, the angular velocity (w) of each of the four legs of the four-legged robot 10 is different, the size of the variable filter region corresponding to each of the four legs is also different.

In the example illustrated in Fig. 18, the variable filter region of the left front leg is the largest, and the variable filter region of the right front leg is the smallest.

Note that the variable filter region of the right front leg is set to be equal to the size of the right front leg itself and not to include the surrounding region of the right front leg.

This means that the right front leg does not rotate but stops. That is, in the state of the angular velocity $\omega = 0$, the variable filter region of the leg portion becomes equal to the size of the leg portion itself, and becomes a region not including the peripheral region of the leg portion.

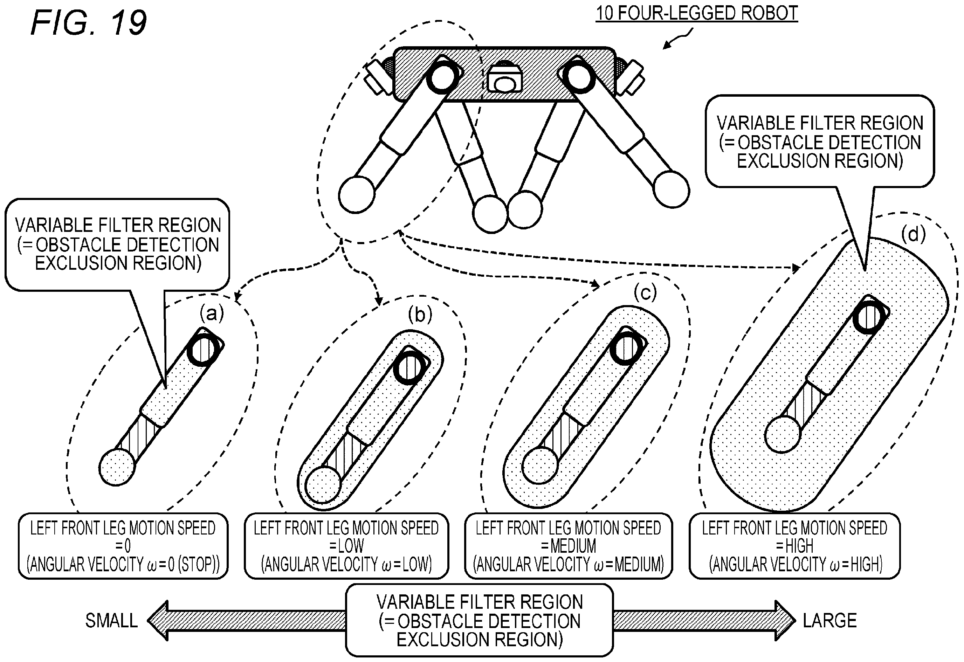

Fig. 19 is a diagram for explaining a change in the variable filter region according to the operating state of the leg.

Figs. 19(a) to (d) illustrate setting examples of the variable filter region in four operation states in which the angular velocity w of the left front leg of the four-legged robot 10 is different.

Fig. 19(a) is an example of the variable filter region in a case where the motion speed of the left front leg of the four-legged robot 10 is 0 (stop), that is, in a case where the angular velocity w = 0. In this case, the variable filter region is a region that matches the components of the leg, and is not set around the leg.

Fig. 19(b) is an example of the variable filter region in a case where the motion speed of the left front leg of the four-legged robot 10 is low, that is, in a case where the angular velocity w = low.

Fig. 19(c) is an example of the variable filter region in a case where the motion speed of the left front leg of the four-legged robot 10 is medium, that is, in a case where the angular velocity w = medium.

Fig. 19(d) is an example of the variable filter region in a case where the motion speed of the left front leg of the four-legged robot 10 is high, that is, in a case where the angular velocity w = high.

As described above, the variable filter region calculation unit 122 of the self-region filter processing unit 103 calculates variable filter regions having different sizes depending on the motion speed of the movable part such as the leg that sets the variable filter region.

As described above with reference to Fig. 16, the three-dimensional point cloud filter processing unit 123 of the self-region filter processing unit 103 applies the variable filter region calculated by the variable filter region calculation unit 122, executes the filter processing of removing the object-corresponding three-dimensional point cloud in the filter region from the three-dimensional point clouds F to R generated by the three-dimensional point cloud (PC) generation unit 102, generates a new three-dimensional point cloud, that is, the post-filter three-dimensional point clouds F to R, and outputs the generated three-dimensional point cloud to the next-stage three-dimensional point cloud (PC) synthesis unit 104.

Next, processing after the three-dimensional point cloud (PC) synthesis unit 104 in the data processing unit illustrated in Fig. 9 will be described.

The three-dimensional point cloud (PC) synthesis unit 104 receives the filtered three-dimensional point clouds F to R from the three-dimensional point cloud filter processing unit 123 of the self-region filter processing unit 103.

As described above, the post-filter three-dimensional point clouds F to R are three-dimensional point cloud data obtained by removing the three-dimensional point cloud of the structural portion of the robot itself such as the leg portion of the robot.

The three-dimensional point cloud (PC) synthesis unit 104 synthesizes the input four post-filter three-dimensional point clouds F to R to generate one piece of post-filter three-dimensional point cloud synthesis data.

Fig. 9 illustrates the post-filter three-dimensional point cloud (F, B, L, R) synthesis data as the output of the three-dimensional point cloud (PC) synthesis unit 104.

The post-filter three-dimensional point cloud (F, B, L, R) synthesis data output from the three-dimensional point cloud (PC) synthesis unit 104 is synthesis data of the post-filter three-dimensional point clouds F to R obtained by removing (filtering) the three-dimensional point cloud related to the structural part of the robot from the three-dimensional point clouds F to R generated on the basis of the four distance images F to R which are the outputs of the four visual sensors F, 12F to the visual sensors R, 12R attached to the front, back, left, and right of the four-legged robot 10 illustrated in Fig. 1, and is data indicating the three-dimensional position and three-dimensional shape of the object such as the obstacle other than the robot structural parts around the front, back, left, and right of the four-legged robot 10 by a point cloud.

Note that as described above, the four visual sensor F, 12F to R, 12R illustrated in Fig. 1 all face obliquely downward, and the post-filter three-dimensional point cloud (F, B, L, R) synthesis data is data indicating the three-dimensional position and three-dimensional shape of the surrounding object below the horizontal plane of the camera position of the four-legged robot 10 by a point cloud. The post-filter three-dimensional point cloud (F, B, L, R) synthesis data includes a three-dimensional shape such as unevenness and inclination of the traveling surface.

However, the robot structural body such as the leg of the robot is not included because the robot structural body is removed by the filter processing.

The post-filter three-dimensional point cloud (F, B, L, R) synthesis data generated by the three-dimensional point cloud (PC) synthesis unit 104 is input to the map image generation unit 105.

The map image generation unit 105 uses the post-filter three-dimensional point cloud (F, B, L, R) synthesis data generated by the three-dimensional point cloud (PC) synthesis unit 104 to generate map data indicating a three-dimensional shape including a traveling surface of an object around the robot.

Fig. 9 illustrates three-dimensional map data (or 2.5 dimensional map data) as an output of the map image generation unit 105.

The map data generated by the map image generation unit 105 is various types of three-dimensional map data or 2.5 dimensional map data.

Specifically, the data is 2.5 dimensional map data such as a height map.

The height map is, for example, map data in which height data (z) is recorded in association with a representative coordinate position of two-dimensional coordinates (x, y) on an xy horizontal plane.

In principle, the three-dimensional map records data of all xyz coordinate positions, but the height map as the 2.5 dimensional map is, for example, map data in which one piece of height data (z) is allocated to a constant xy plane region, for example, a square region surface of 5 mm square, and can be generated as map data with a data amount reduced from that of a general three-dimensional map. Note that the 2.5 dimensional map is also map data having three-dimensional information, and is map data included in the three-dimensional map in a broad sense.

The three-dimensional map data (for example, a height map) generated by the map image generation unit 105 is input to the next time-series map image integration unit 106.

The time-series map image integration unit 106 performs integration processing of time-series data of three-dimensional map data (for example, a height map) generated by the map image generation unit 105.

Specifically, for example, the following processing is performed.

(1) Three-dimensional map data (t1) such as a height map generated by the map image generation unit 105 on the basis of the four distance images F to R (t1) captured at the time t1 by the four visual sensors F to R, 12F to R;
(2) Three-dimensional map data (t2) such as a height map generated by the map image generation unit 105 on the basis of the four distance images F to R (t2) captured by the four visual sensors F to R, 12F to R at time t2; and
(3) Three-dimensional map data (t3) such as a height map generated by the map image generation unit 105 on the basis of the four distance images F to R (t3) captured by the four visual sensors F to R, 12F to R at time t3.

The time-series map image integration unit 106 integrates a plurality of pieces of time-series three-dimensional map data (t1) to (t3) generated on the basis of the distance images photographed at different times (t1 to t3) to generate one piece of time-series map integrated map data (for example, an integrated height map) .

That is, the time-series integrated map data (t1) is generated from the three-dimensional map data (t1), and when the three-dimensional map data (t2) is input to the time-series map image integration unit 106, the time-series integrated map data (t1 to t2) is generated. Moreover, when the three-dimensional map data (t3) is input to the time-series map image integration unit 106, time-series map integrated map data (t1 to t3) is generated.

Note that each of the plurality of pieces of time-series three-dimensional map data (t1) to (t3) generated on the basis of the plurality of pieces of imaging data at different times has an overlapping region, and there is also a region included only in one piece of map data.

For example, there is a case where the distance image captured at a certain timing (t1) does not include the distance value of the object behind the foot of the robot, but the distance image captured at the next timing (t2) includes the distance value of the object hidden at the timing (t1).

The time-series map image integration unit 106 integrates a plurality of pieces of time-series three-dimensional map data (t1) to (t3) generated on the basis of distance images photographed at a plurality of different timings, thereby generating one piece of time-series map integrated map data (integrated height map) capable of acquiring three-dimensional shapes of almost all objects in the camera imaging range around the robot. Note that the self-position of the robot is required to generate the time-series map integrated map data (integrated height map), but the self-position can be acquired by using, for example, simultaneous localization and mapping (SLAM) technology using a distance image or three-dimensional point cloud (F, B, L, R) composite data as an input.

Note that the number of pieces of the time-series three-dimensional map data to be integrated by the time-series map image integration unit 106 is three pieces in the above-described example, but since time-series integration is sequentially performed, any number of pieces of the time-series three-dimensional map data can be integrated, not only three pieces but also two pieces or four pieces. Furthermore, if there is no particularly hidden portion in the time-series three-dimensional map data generated only from the distance image captured at a certain timing, the integration processing can be omitted.

Here, it is assumed that the time-series map image integration unit 106 generates one piece of time-series map integrated map data by integrating a plurality of pieces (n pieces) of time-series three-dimensional map data (t1) to (tn) generated on the basis of distance images captured at a plurality of different timings.

One piece of the time-series map integrated map data generated by the time-series map image integration unit 106 is output to the robot control unit 107.

One piece of time-series map integrated map data generated by the time-series map image integration unit 106 is 2.5 dimensional image data such as a height map that enables acquisition of three-dimensional shapes of almost all objects in a camera imaging range around the robot.

However, object position information of the structure of the robot itself such as the leg of the filtered robot is not included. That is, it is 2.5 dimensional image data such as a height map including information regarding an object that is a true obstacle.

The robot control unit 107 refers to one piece of time-series map integrated map data generated by the time-series map image integration unit 106 to confirm the position of an object that can be an obstacle, determines a route that does not collide with or come into contact with these obstacles as a travel route, and moves the legs to perform safe traveling.

Note that, in a case where the robot to be controlled is a robot that performs various works by, for example, the motion of the arm as described above with reference to Fig. 3, the robot control unit 107 refers to one piece of time-series map integrated map data generated by the time-series map image integration unit 106, determines the trajectory of the arm, and executes safe work.

That is, the robot control unit 107 refers to one piece of time-series map integrated map data generated by the time-series map image integration unit 106, confirms the position of an object that can be an obstacle, determines the trajectory of the arm that does not collide with or come into contact with these obstacles, and moves the arm to perform safe work.

As described above, the robot device according to the present disclosure performs the filtering processing of removing the object information of the own device from the sensor detection information so that the own device region is not recognized as an obstacle even in a case where a part of the own device is detected by the sensor, and controls the robot using the map data generated on the basis of the filtered data.

By performing such processing, it is possible to perform correct robot control without erroneously recognizing a part of the own device as an obstacle.

[4. (Example 2) Calculation processing example of variable filter region considering linear motion of linear motion joint]

Next, as Example 2, a calculation processing example of the variable filter region in consideration of the linear motion of the linear motion joint will be described.

In Example 1 described above, as described with reference to Fig. 11 and subsequent drawings, the variable padding calculation unit 121 of the self-region filter processing unit 103 calculates variable padding ($Pad_{variable}$) according to the angular velocity $\omega$ of the leg portion of the robot according to the following formula (Formula 2).

$$Pad_{variable} = \tan(\omega \times st) \times Length_{leg} \ldots \text{(Formula 2)}$$

provided that

$\omega$ = angular velocity
st = prescribed unit time (for example, sampling time interval)

Moreover, the variable filter region calculation unit 122 calculates the variable filter region according to the following formula (Formula 3).

$$\text{Pad}_\text{L} = \text{L} + (\text{Pad}_\text{variable}) \times 2$$

$$\text{Pad}_\text{W} = \text{W} + (\text{Pad}_\text{variable}) \times 2$$

$$\text{Pad}_\text{H} = \text{H} + (\text{Pad}_\text{variable}) \times 2$$

$$.... \text{ (Formula 3)}$$

provided that

L, W, and H are lengths of three axes of a rectangular parallelepiped enclosing a movable part for setting a variable filter region.

(Formula 2) and (Formula 3) are, for example, a variable padding ($\text{Pad}_\text{variable}$) calculation formula and a variable filter region calculation formula in consideration of the movement of the lower leg corresponding to the lower half leg of the leg 13 due to the rotation of the rotary joint 14 of the leg 13 of the four-legged robot 10 illustrated in Fig. 1.

For example, a variable padding ($\text{Pad}_\text{variable}$) calculation formula considering the movement of the lower leg due to the linear motion of the linear motion joint 15 of the leg 13 of the four-legged robot 10 is a formula different from (Formula 2) described above.

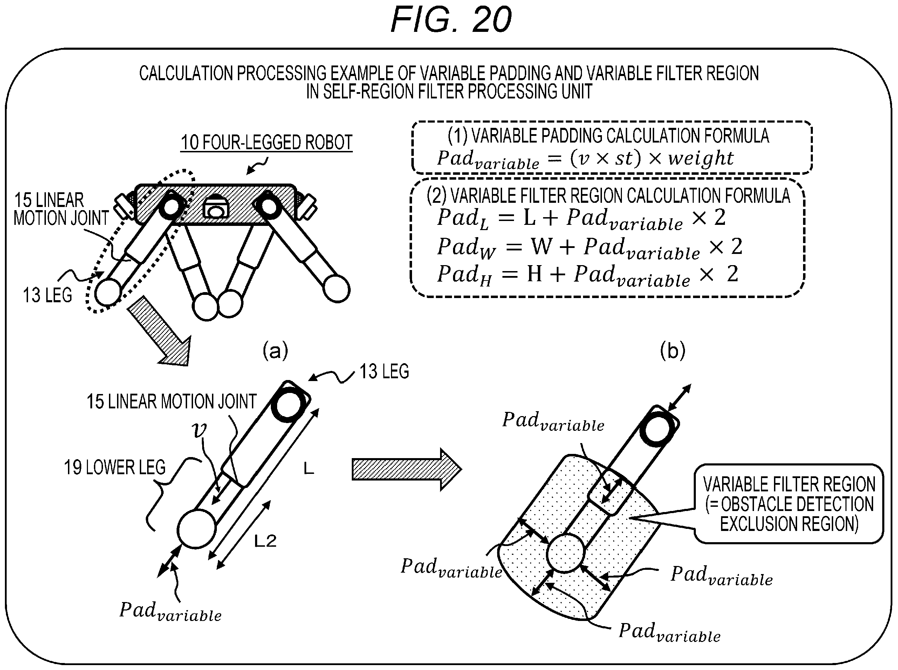

With reference to Fig. 20, variable padding ($\text{Pad}_\text{variable}$) calculation processing example in consideration of the movement of the lower leg 19 due to the linear motion of the linear motion joint 15 of the leg 13 of the four-legged robot 10 and calculation processing example of the variable filter region will be described.

Fig. 20(a) is a diagram illustrating a calculation example of a variable padding ($\text{Pad}_\text{variable}$) in consideration of the movement of the lower leg 19 due to the linear motion of the linear motion joint 15 of the left front leg of the four-legged robot 10 at the time (t) .

The length of the leg 13 is indicated by L, and the length of the lower leg 19 is indicated by L2.

The variable padding calculation unit 121 of the self-region filter processing unit 103 illustrated in Fig. 11 calculates variable padding ($\text{Pad}_\text{variable}$) according to the linear motion speed v of the lower leg 19 of the robot according to the following formula (Formula 4).

$$\text{Pad}_\text{variable} = (v \times st) \times \text{weight}... \text{ (Formula 4)}$$

provided that

v = linear motion speed of lower leg by operation of linear motion joint
st = prescribed unit time (for example, sampling time interval)
weight = weight (predefined weight value)

Fig. 20(b) illustrates an example of the variable padding region calculated by the variable filter region calculation unit 122 using the variable padding ($\text{Pad}_\text{variable}$) calculated by the variable padding calculation unit 121 according to the formula (Formula 4) described above.

Fig. 20(b) illustrates variable filter regions in the L direction and the W direction on the LW plane.

The filter region in the length direction (L direction) of the lower leg is a region obtained by adding variable padding ($\text{Pad}_\text{variable}$) to the length (L2) of the lower leg 19 at two ends in the length direction of the lower leg 19, that is, each of the upper end and the lower end.

Similarly, the filter region in the front-back direction (W direction) of the lower leg is a region obtained by adding variable padding ($\text{Pad}_\text{variable}$) to the front-back width (W) of the lower leg at each of two ends in the front-back direction of the lower leg, that is, the front end and the rear end.

Moreover, although not illustrated in Fig. 20(b), the filter region in the left-right direction (H direction) of the lower leg is a region obtained by adding variable padding ($\text{Pad}_\text{variable}$) to each of two ends in the left-right direction of the leg, that is, the left end and the right end of the lower leg in the left-right depth (H) of the lower leg.

That is, the variable filter region calculated by the variable filter region calculation unit 122 is a region in which the maximum length in each direction of the LWH has a length calculated according to the following formula (Formula 5), similarly to the variable filter region calculated in consideration of the rotation of the rotary joint described above with reference to Fig. 14 and the like.

$$\mathrm{Pad_L = L2 + (Pad_{variable}) \times 2}$$

$$\mathrm{Pad_W = W + (Pad_{variable}) \times 2}$$

$$\mathrm{Pad_H = H + (Pad_{variable}) \times 2}$$

$$.... \ (\text{Formula 5})$$

provided that

2L, W, and H are lengths of three axes of a rectangular parallelepiped enclosing a movable part for setting a variable filter region.

The size of the variable filter region calculated by (Formula 5) described above is larger as the linear motion speed (v) of the linear motion joint is larger, and is smaller as the linear motion speed (v) is smaller.

That is, the variable filter region is a region whose size changes according to the motion speed of the movable part such as the leg.

Note that the leg 13 of the four-legged robot 10 illustrated in Fig. 1 has a rotary joint 14 at the upper end, and a linear motion joint 15 at the middle position of the leg 13. During actual robot operation, these two joint portions may operate simultaneously.

In this case, it is necessary to calculate the variable padding ($\mathrm{Pad_{variable}}$) and the variable filter region in consideration of these two motions, that is, the rotational motion of the rotary joint 14 and the linear motion of the linear motion joint 15.

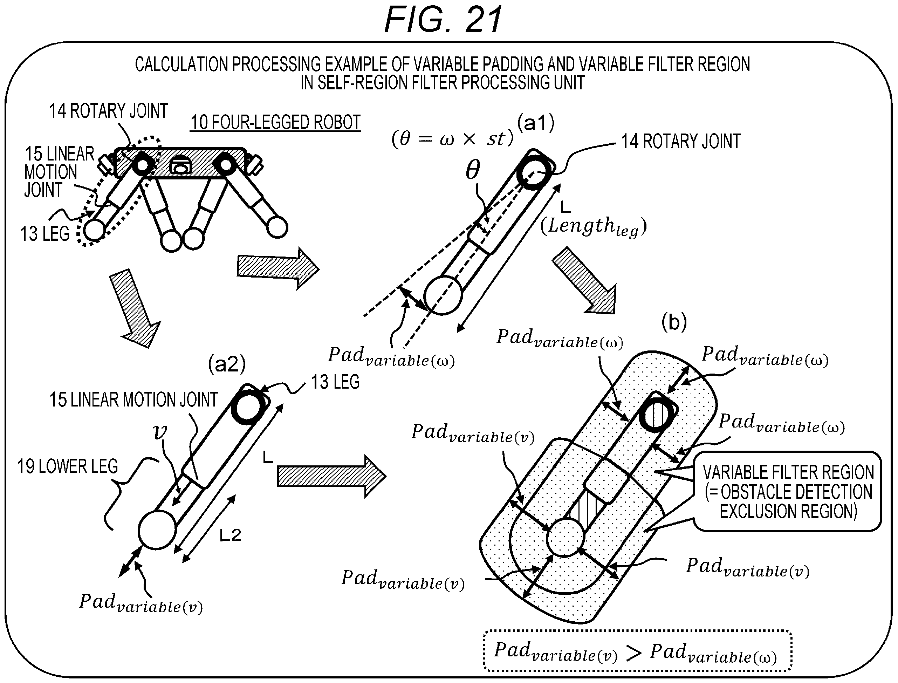

A specific example of this processing will be described with reference to Fig. 21.

Fig. 21 illustrates a calculation example of the variable padding ($\mathrm{Pad_{variable}}$) in consideration of the movement of the leg 13 due to the rotation of the rotary joint 14 of the left front leg of the four-legged robot 10 and a calculation example of a variable padding ($\mathrm{Pad_{variable}}$) in consideration of the movement of the lower leg 19 due to the linear movement of the linear motion joint 15 of the left front leg.

Fig. 21(a1) illustrates a calculation example of the pivotal variable padding ($\mathrm{Pad_{variable(\omega)}}$) in consideration of the movement of the leg 13 due to the rotation of the rotary joint 14 of the left front leg of the four-legged robot 10.

Fig. 21(a2) illustrates a calculation example of the linear motion compatible variable padding ($\mathrm{Pad_{variable(v)}}$) in consideration of the movement of the lower leg 19 due to the linear motion of the linear motion joint 15 of the left front leg of the four-legged robot 10.

The length of the leg 13 is indicated by L, and the length of the lower leg 19 is indicated by L2.

The calculation processing of the pivoting correspondence variable padding ($\mathrm{Pad_{variable(\omega)}}$) in consideration of the movement of the leg 13 due to the rotation of the rotary joint 14 illustrated in Fig. 21(a1) is the processing described above with reference to Fig. 14 and the like.

That is, the variable padding calculation unit 121 of the self-region filter processing unit 103 illustrated in Fig. 11 calculates the rotation corresponding variable padding ($\mathrm{Pad_{variable(\omega)}}$) of the left front leg of the four-legged robot 10 at the time (t) according to the following formula (Formula 2) described above.

$$\mathrm{Pad_{variable(\omega)} = tan \ (\omega \times st) \times Length_{leg}} ... \ (\text{Formula}$$
$$2)$$

provided that

$\omega$ = angular velocity
st = prescribed unit time (for example, sampling time interval)

Calculation is performed according to the formula (Formula 2) described above.

Furthermore, the calculation processing of the linear motion compatible variable padding ($\mathrm{Pad_{variable(v)}}$) in consideration of the movement of the lower leg 19 due to the linear motion of the linear motion joint 15 illustrated in Fig. 21(a2) is the processing described above with reference to Fig. 20.

That is, the variable padding calculation unit 121 of the self-region filter processing unit 103 illustrated in Fig. 11 calculates the linear motion compatible variable padding ($\mathrm{Pad_{variable(v)}}$) of the left front leg of the four-legged robot 10 at the time (t) according to the formula (Formula 4) described above.

$$\mathrm{Pad_{variable(v)} = (v \times st) \times weight} ... \ (\text{Formula 4})$$

provided that

v = linear motion speed of lower leg by operation of linear motion joint
st = prescribed unit time (for example, sampling time interval)
weight = weight (predefined weight value)

Calculation is performed according to the formula (Formula 4) described above.

Fig. 21(b) illustrates an example of the variable padding region calculated by the variable filter region calculation unit 122 using the pivoting correspondence variable padding ($Pad_{variable(\omega)}$) illustrated in Fig. 21(a1), that is, the pivoting correspondence variable padding ($Pad_{variable(\omega)}$) calculated by the variable padding calculation unit 121 according to (Formula 2), and the linear motion correspondence variable padding ($Pad_{variable(v)}$) illustrated in Fig. 21(a2), that is, the linear motion correspondence variable padding ($Pad_{variable(v)}$) calculated by the variable padding calculation unit 121 according to (Formula 4).

As illustrated in Fig. 21(b), the variable filter region calculation unit 122 performs processing of setting a padding region in which a pivoting correspondence variable padding ($Pad_{variable(\omega)}$) and a linear motion correspondence variable padding ($Pad_{variable(v)}$) are superimposed.

In the example illustrated in the drawing, a filter region considering only the pivotal variable padding ($Pad_{variable(\omega)}$) is set for the upper leg of the upper half of the leg 13.

On the other hand, in the lower leg 19 of the lower half of the leg 13, a filter region in which the rotation corresponding variable padding ($Pad_{variable(\omega)}$) and the linear motion corresponding variable padding ($Pad_{variable(v)}$) are superimposed is set.

In the example of the drawing, the linear motion corresponding variable padding ($Pad_{variable(v)}$) is larger than the pivot corresponding variable padding ($Pad_{variable(\omega)}$), that is,

Linear motion corresponding variable padding ($Pad_{variable(v)}$) > Rotary motion corresponding variable padding ($Pad_{variable(\omega)}$)

With this relationship, the filter region defined by the linear motion corresponding variable padding ($Pad_{variable(v)}$), which is a larger padding value, is set in the lower leg 19 of the lower half of the leg 13.

That is, in the variable filter region calculated by the variable filter region calculation unit 122, for the upper leg of the upper half of the leg 13,

$$Pad_L = L + (Pad_{variable(\omega)}) \times 2$$
$$Pad_W = W + (Pad_{variable(\omega)}) \times 2$$
$$Pad_H = H + (Pad_{variable(\omega)}) \times 2$$
$$\ldots \text{(Formula 6)}$$

The region is defined by the formula (Formula 6) described above.

Moreover, for the lower leg 19 of the lower half of the leg 13,

$$Pad_L = L2 + (Pad_{variable(v)}) \times 2$$
$$Pad_W = W + (Pad_{variable(v)}) \times 2$$
$$Pad_H = H + (Pad_{variable(v)}) \times 2$$
$$\ldots \text{(Formula 7)}$$

The region is defined by the formula (Formula 7) described above.

Note that the size of the variable filter region calculated by (Formula 6) and (Formula 7) described above is larger as the rotational speed (w) of the rotary joint 14 and the linear motion speed (v) of the linear motion joint 15 are larger, and is smaller as the speed is smaller.

That is, the variable filter region is a region whose size changes according to the motion speed of the movable part such as the leg.

[5. Other examples]

Next, other examples will be described.

The following examples will be sequentially described.

(a) Example 3: Example of calculating variable filter region by multiplying movable part size of robot by padding region
(b) Example 4: Example of calculating a variable filter region by distinguishing an operation region and a non-operation region of a robot movable part
(c) Example 5: Example of identifying motion direction of robot movable part and calculating variable filter region
(d) Example 6: Example in which fixed padding region and variable padding region are set and variable filter region is calculated on the basis of these two padding regions
(e) Example 7: Example of calculating variable filter region corresponding to movable part having a plurality of rotary joints

(5-(a) Example 3: Example in which variable filter region is calculated by multiplying movable part size of robot by padding region)

First, as Example 3, an example in which the size of the movable part of the robot is multiplied by the padding region to calculate the variable filter region will be described.

In Example 1 described above, as described with reference to Fig. 11 and subsequent drawings, the variable padding calculation unit 121 of the self-region filter processing unit 103 calculates variable padding ($Pad_{variable}$) according to the angular velocity $\omega$ of the leg portion of the robot according to the following formula (Formula 2).

$$Pad_{variable} = tan(\omega \times st) \times Length_{leg}... \quad (Formula\ 2)$$

provided that

$\omega$ = angular velocity
st = prescribed unit time (for example, sampling time interval)

Moreover, the variable filter region calculation unit 122 calculates the variable filter region according to the following formula (Formula 3).

$$Pad_L = L + (Pad_{variable}) \times 2$$

$$Pad_W = W + (Pad_{variable}) \times 2$$

$$Pad_H = H + (Pad_{variable}) \times 2$$

$$.... \quad (Formula\ 3)$$

provided that
L, W, and H are lengths of three axes of a rectangular parallelepiped enclosing a movable part for setting a variable filter region.

The variable padding calculation unit 121 of the self-region filter processing unit 103 may be configured to use the formula (Formula 8) below different from (Formula 2) described above in the calculation processing of the variable padding ($Pad_{variable}$).

$$Pad_{variable} = tan(\omega \times st) \times Length_{leg} \times scale...$$

$$(Formula\ 8)$$

provided that

$\omega$ = angular velocity
st = prescribed unit time (for example, sampling time interval)

scale = weight (predefined weight)

Moreover, the variable filter region calculation unit 122 calculates the variable filter region according to the following formula (Formula 9).

$$Pad_L = L \times (Pad_{variable})$$

$$Pad_W = W \times (Pad_{variable})$$

$$Pad_H = H \times (Pad_{variable})$$

$$\dots \ (Formula \ 9)$$

provided that

L, W, and H are lengths of three axes of a rectangular parallelepiped enclosing a movable part for setting a variable filter region.

In (Formula 3) described above, in the calculation processing of the variable filter region, the variable padding ($Pad_{variable}$) is added to each end portion of the lengths L, W, and H of the three axes of the rectangular parallelepiped enclosing the movable part for setting the variable filter region to calculate the variable filter region.

On the other hand, in (Formula 9) described above, in the calculation processing of the variable filter region, each of the lengths L, W, and H of the three axes of the rectangular parallelepiped enclosing the movable part that sets the variable filter region is multiplied by variable padding ($Pad_{variable}$) to calculate the variable filter region.

Processing of calculating the variable filter region may be performed by applying such (Formula 9).

Note that also in (Formula 9) described above, the size of the variable filter region to be calculated becomes larger as the motion speed (for example, the angular velocity ($\omega$)) of the movable part is larger, and becomes smaller as the motion speed (for example, the angular velocity ($\omega$)) of the movable part is smaller.

That is, the variable filter region is a region whose size changes according to the motion speed of the movable part of the robot, such as the leg of the robot.

(5-(b) Example 4: Example of calculating variable filter region by distinguishing between operation region and non-operation region of robot movable part)

Next, as Example 4, an example in which the variable filter region is calculated by distinguishing the operation region and the non-operation region of the movable part of the robot will be described.

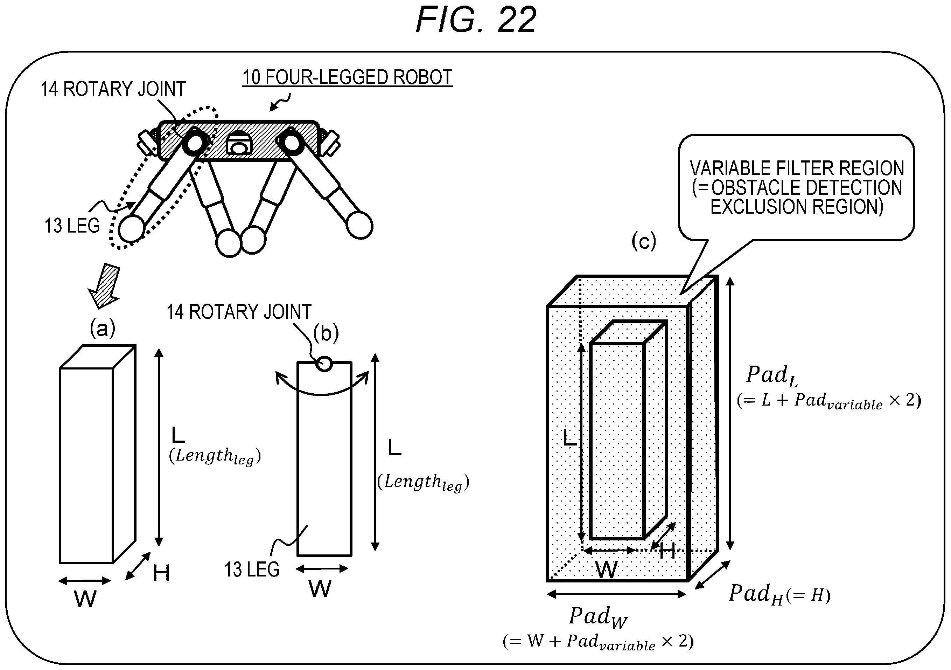

Details of Example 4 will be described with reference to Fig. 22.

Fig. 22 is a diagram illustrating an example of processing of calculating variable padding to be set for the left front leg of the four-legged robot 10, similar to what was described above with reference to Figs. 12 and 13.

Similarly to Figs. 12 and 13 described above, the shape of the left front leg of the four-legged robot 10 is simplified as a quadrangular prism for easy understanding of the calculation processing of variable padding.

As illustrated in Fig. 22(a), the shape of the left front leg is illustrated as a quadrangular prism of L × W × H with a length (L(Length$_{leg}$)), a width (W) in the front-back direction, and a depth (H) in the left-right direction.

As illustrated in Fig. 22(b), the leg 13 of the four-legged robot 10 is configured to rotate in the front-back direction (W direction) around the rotary joint 14 at the upper end.

The leg 13 turns on the LW plane and does not move in the H direction (the left-right direction of the four-legged robot 10).

That is, the operation region of the leg 13 is the LW plane, and the H direction is the non-operation region.

Example 4 is an example in which the variable filter region is calculated by distinguishing the operation region and the non-operation region of the robot movable part, and the variable filter region calculation unit 122 calculates the variable filter region as illustrated in Fig. 22(c).

The variable filter region calculated by the variable filter region calculation unit 122 is a quadrangular prism including three sides having a length calculated according to the following formula (Formula 10).

$$\text{Pad}_L = L + (\text{Pad}_{variable}) \times 2$$

$$\text{Pad}_W = W + (\text{Pad}_{variable}) \times 2$$

$$\text{Pad}_H = H$$

$$\ldots \ldots \text{(Formula 10)}$$

provided that

L, W, and H are lengths of three axes of a rectangular parallelepiped enclosing a movable part for setting a variable filter region.

That is, variable padding ($\text{Pad}_{variable}$) is additionally set only in the LW plane which is the operation region of the leg 13 which is the robot movable part, and only the length (H) in the H direction of the leg 13 is set as the filter region without additionally setting variable padding ($\text{Pad}_{variable}$) in the H direction which is the non-operation region of the leg 13.

Note that, in the present Example 4, processing similar to that in Example 3 described above can also be applied.

That is, processing of calculating the variable filter region by multiplying each of the lengths L, W, and H of the three axes of the rectangular parallelepiped enclosing the movable part for setting the variable filter region by variable padding ($\text{Pad}_{variable}$) may be performed.

For example, processing of calculating the variable filter region may be performed using (Formula 11) shown below.

$$\text{Pad}_L = L \times (\text{Pad}_{variable})$$

$$\text{Pad}_W = W \times (\text{Pad}_{variable})$$

$$\text{Pad}_H = H$$

$$\ldots \ldots \text{(Formula 11)}$$

provided that

L, W, and H are lengths of three axes of a rectangular parallelepiped enclosing a movable part for setting a variable filter region.

In this manner, the present Example 4 is an example in which the variable filter region is calculated by distinguishing the operation region and the non-operation region of the robot movable part.

By setting such a variable filter region, it is possible to avoid expansion of the filter region in a direction independent of the motion direction of the movable part. As a result, it is possible to prevent excessive filter processing of an object such as an obstacle in an unintended direction, and it is possible to effectively use information from the external sensor.

(5-(c) Example 5: Example of identifying motion direction of robot movable part and calculating variable filter region)

Next, as Example 5, an example in which the motion direction of the robot movable part is identified and the variable filter region is calculated will be described.

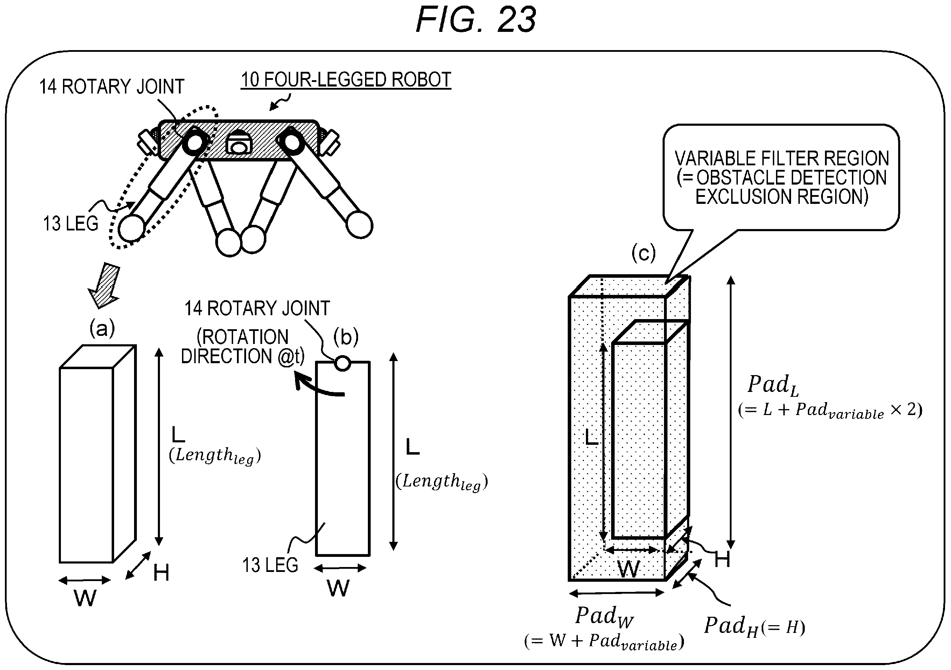

Details of Example 5 will be described with reference to Fig. 23.

Fig. 23 is a diagram illustrating a calculation process example of variable padding set to the left front leg of the four-legged robot 10 similarly to Fig. 22.

Similarly to Fig. 22 described above, the shape of the left front leg of the four-legged robot 10 is simply illustrated as a quadrangular prism for easy understanding of the calculation processing of variable padding.

As illustrated in Fig. 23(a), the shape of the left front leg is illustrated as a quadrangular prism of L × W × H with a length ($L(\text{Length}_{leg})$), a width (W) in the front-back direction, and a depth (H) in the left-right direction.

Fig. 23(b) is a diagram illustrating a rotation state of the leg 13 at a certain timing (time (t)) when the self-region filter processing unit 103 executes the variable padding calculation processing and the variable filter region calculation processing.

As illustrated in Fig. 23(b), it is assumed that the leg 13 of the four-legged robot 10 is in a state of rotating in the left direction around the rotary joint 14 at the upper end.

Example 5 is an example of identifying the motion direction of the robot movable part and calculating the variable filter region. In a case where the leg 13 of the four-legged robot 10 is in a state of rotating leftward about the rotary joint 14 at the upper end as illustrated in Fig. 23(b), the variable filter region extending in the rotation direction is calculated.

That is, the variable filter region calculation unit 122 calculates a variable filter region as illustrated in Fig. 23(c).

The variable filter region calculated by the variable filter region calculation unit 122 is a quadrangular prism including three sides having a length calculated according to the following formula (Formula 12).

$$Pad_L = L + (Pad_{variable}) \times 2$$
$$Pad_W = W + (Pad_{variable})$$
$$Pad_H = H$$
$$\ldots \text{ (Formula 12)}$$

provided that

L, W, and H are lengths of three axes of a rectangular parallelepiped enclosing a movable part for setting a variable filter region.

Here, in (Formula 12) described above,

$$Pad_W = W + (Pad_{variable})$$

A setting direction of this ($Pad_{variable}$) is set to a motion direction of the leg 13, that is, the left side which is a motion direction of the leg 14 as illustrated in Fig. 23(c).

As described above, in Example 5, variable padding ($Pad_{variable}$) is additionally set in the motion direction of the leg 13 which is the robot movable part, and variable padding ($Pad_{variable}$) is not set in the direction opposite to the motion direction of the leg 13.

Note that, in the present Example 5, processing similar to that in Example 3 described above can also be applied.

That is, processing of calculating the variable filter region by multiplying each of the lengths L, W, and H of the three axes of the rectangular parallelepiped enclosing the movable part for setting the variable filter region by variable padding ($Pad_{variable}$) may be performed.

The present Example 5 is an example in which the variable filter region is calculated by distinguishing the motion direction and the non-motion direction of the robot movable part as described above.

By setting such a variable filter region, it is possible to avoid expansion of the filter region in a direction independent of the motion direction of the movable part. As a result, it is possible to prevent excessive filter processing of an object such as an obstacle in an unintended direction, and it is possible to effectively use information from the external sensor.

(5-(d) Example 6: Example in which fixed padding region and variable padding region are set and variable filter region is calculated on the basis of these two padding regions)

Next, as Example 6, an example in which a fixed padding region and a variable padding region are set and a variable filter region is calculated on the basis of these two padding regions will be described.

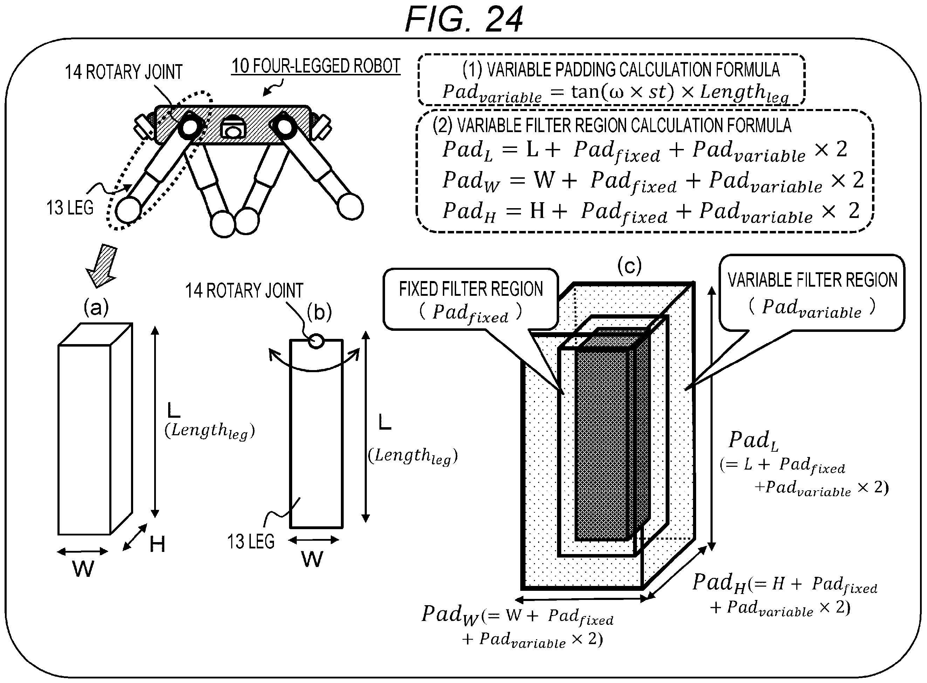

Details of Example 6 will be described with reference to Fig. 24.

Fig. 24 is a view illustrating a calculation processing example of variable padding set to the left front leg of the four-legged robot 10 similarly to Figs. 22 and 23.

Similarly to Figs. 22 and 23 described above, the shape of the left front leg of the four-legged robot 10 is simplified as a quadrangular prism for easy understanding of the calculation processing of variable padding.

As illustrated in Fig. 24(a), the shape of the left front leg is illustrated as a quadrangular prism of L × W × H with a length (L(Length$_{leg}$)), a width (W) in the front-back direction, and a depth (H) in the left-right direction.

As illustrated in Fig. 24(b), the leg 13 of the four-legged robot 10 is configured to rotate in the front-back direction (W direction) around the rotary joint 14 at the upper end.

In the present Example 6, a fixed padding region ($Pad_{fixed}$) and a variable padding region ($Pad_{variable}$) are set, and a variable filter region is calculated on the basis of these two padding regions.

The fixed padding region ($Pad_{fixed}$) is a filter region fixed in advance around the movable part for setting the filter region.

The variable padding region ($Pad_{variable}$) corresponds to a filter region that changes according to the motion speed of the movable part that sets the filter region.

Fig. 24(c) illustrates a setting example of the fixed filter region defined by the fixed padding region ($Pad_{fixed}$)

and the variable filter region defined by the variable padding region ($Pad_{variable}$) .

In Example 6, the variable filter region calculated by the variable filter region calculation unit 122 is a quadrangular prism including three sides having a length calculated according to the following formula (Formula 13) .

$$Pad_L = L + (Pad_{fixed}) + (Pad_{variable}) \times 2$$

$$Pad_W = W + (Pad_{fixed}) + (Pad_{variable}) \times 2$$

$$Pad_H = H + (Pad_{fixed}) + (Pad_{variable}) \times 2$$

$$.... \quad (Formula\ 13)$$

provided that
L, W, and H are lengths of three axes of a rectangular parallelepiped enclosing a movable part for setting a variable filter region.

As described above, in the present Example 6, the fixed filter region and the variable filter region are set using the fixed padding region ($Pad_{fixed}$) and the variable padding region ($Pad_{variable}$) .

Note that, in the present Example 6, processing similar to that in Example 3 described above can also be applied.

That is, processing of calculating the variable filter region by multiplying each of the lengths L, W, and H of the three axes of the rectangular parallelepiped enclosing the movable part for setting the variable filter region by variable padding ($Pad_{variable}$) may be performed.

For example, processing of calculating the variable filter region may be performed using (Formula 14) shown below.

$$Pad_L = L \times (Pad_{fixed}) \times (Pad_{variable})$$

$$Pad_W = W \times (Pad_{fixed}) \times (Pad_{variable})$$

$$Pad_H = H \times (Pad_{fixed}) \times (Pad_{variable})$$

$$.... \quad (Formula\ 14)$$

provided that
L, W, and H are lengths of three axes of a rectangular parallelepiped enclosing a movable part for setting a variable filter region.

As described above, the present Example 6 is configured to set the variable filter region including the fixed padding region ($Pad_{fixed}$) fixed in advance and the variable padding region ($Pad_{variable}$) that changes according to the operation state (motion speed) of the movable part.

In the present Example 6, for example, even in a case where the movable part is in a stopped state, a filter region having a fixed padding region ($Pad_{fixed}$) fixed in advance is set, and for example, in a case where there is an assembly error or the like in the robot, it is possible to prevent processing of erroneously recognizing a configuration of a leg portion or the like included in the error region as an obstacle.

(5-(e) Example 7: Example of calculating variable filter region corresponding to a movable part having a plurality of rotary joints)

Next, as Example 7, an example for calculating a variable filter region corresponding to a movable part having a plurality of rotary joints will be described.

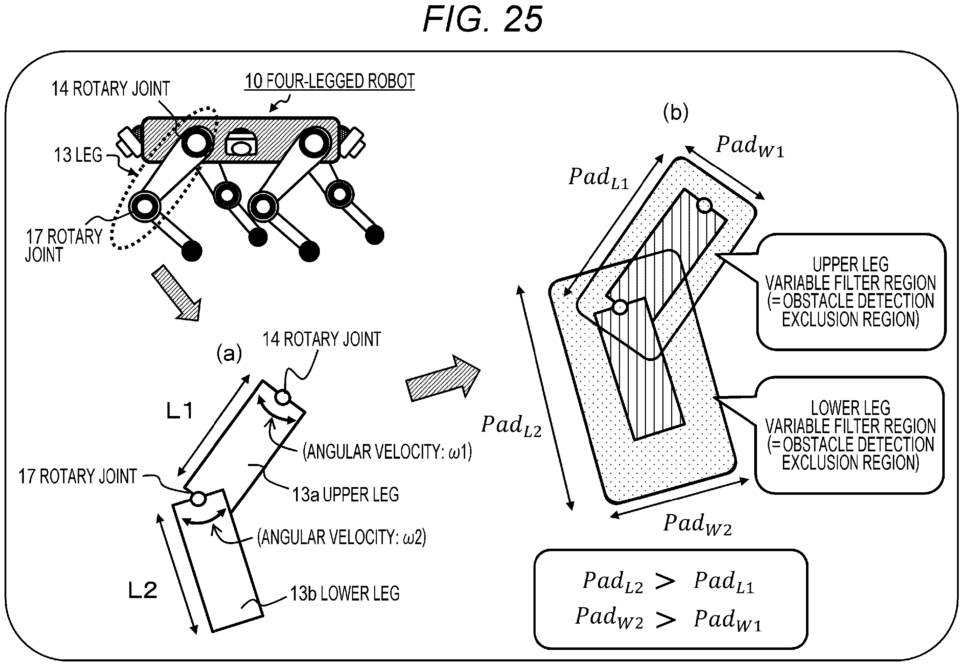

Details of Example 7 will be described with reference to Fig. 25.

The four-legged robot b, 10b illustrated in the upper left of Fig. 25 correspond to the four-legged robot b, 10b described above with reference to Fig. 2.

That is, the rotary joint 13 is provided at the upper end of the leg 13, and further, another rotary joint 17 is provided at the middle position of the leg 13.

Fig. 25(a) is a diagram for explaining the operation of the leg 13.

The length of the upper leg 13a of the leg 13 is L1, and the length of the lower leg 13b is L2.

The entire upper leg 13a and the entire lower leg 13b are rotated by the rotation of the rotary joint 13 at the upper end of the leg 13.

Furthermore, only the lower leg 13b is rotated by the rotation of the rotary joint 17 at the middle position of the leg 13.

Here, the angular velocity of the rotation of the rotary joint 13 at the upper end of the leg 13 is ω1, and the angular velocity of the rotation of the rotary joint 17 at the middle stage of the leg 13 is w2.

Using these angular velocities, the variable padding calculation unit 121 of the self-region filter processing unit 103 performs calculation processing of two variable padding ($Pad_{variable}$) according to the following (Formula 15).

$$Pad_{variable1} = \tan(\omega \times st) \times L1$$

$$Pad_{variable2} = \tan(\omega \times st) \times L2$$

$$\ldots \text{(Formula 15)}$$

provided that

$\omega$ = angular velocity

st = prescribed unit time (for example, sampling time interval)

The first variable padding ($Pad_{variable1}$) in (Formula 15) described above is variable padding calculated on the basis of ω1 of the angular velocity of the rotation of the rotary joint 13 at the upper end of the leg 13.

Since the rotation of the rotary joint 13 at the upper end of the leg 13 is the rotation of the entire upper leg 13a and the entire lower leg 13b, the first variable padding ($Pad_{variable1}$) is set as the padding of the entire upper leg 13a and the entire lower leg 13b.

On the other hand, the second variable padding ($Pad_{variable2}$) in (Formula 15) described above is variable padding calculated on the basis of w2 of the angular velocity of the rotation of the rotary joint 17 of the middle part of the leg 13.

Since the rotation of the rotary joint 17 of the middle part of the leg 13 is rotation of only the lower leg 13b, this second variable padding ($Pad_{variable2}$) is set as padding of only the lower leg 13b.

As a result, variable filter region calculation unit 122 calculates the variable filter region by different processing in upper leg 13a and lower leg 13b.

That is, the variable filter region of the upper leg 13a is calculated according to the following formula (Formula 16).

$$Pad_L = L1 + (Pad_{variable1}) \times 2$$

$$Pad_W = W1 + (Pad_{variable1}) \times 2$$

$$Pad_H = H1 + (Pad_{variable1}) \times 2$$

$$\ldots . \text{(Formula 16)}$$

provided that
L1, W1, and H1 are lengths of three axes of a rectangular parallelepiped enclosing the upper leg 13a for setting the variable filter region.

Moreover, the variable filter region of the lower leg 13b is calculated according to the following formula (Formula 17).

$$Pad_L = L2 + (Pad_{variable1} + Pad_{variable2}) \times 2$$

$$Pad_W = W2 + (Pad_{variable1} + Pad_{variable2}) \times 2$$

$$Pad_H = H2 + (Pad_{variable1} + Pad_{variable2}) \times 2$$

$$\ldots . \text{(Formula 17)}$$

provided that
L2, W2, and H2 are lengths of three axes of a rectangular parallelepiped enclosing lower leg 13b for setting the variable filter region.

In this manner, variable filter region calculation unit 122 calculates the variable filter region by different processes in upper leg 13a and lower leg 13b.

Note that processing similar to that of Example 3 described above can be applied to Example 7.

That is, processing of calculating the variable filter region by multiplying each of the lengths L, W, and H of the three axes of the rectangular parallelepiped enclosing the movable part for setting the variable filter region by variable padding ($Pad_{variable}$) may be performed.

Furthermore, the processing of Example 6 described above, that is, the processing of setting the fixed padding region and the variable padding region and calculating the variable filter region on the basis of these two padding regions may be applied.

In this case, variable filter region calculation unit 122 calculates the variable filter region by the following processing using upper leg 13a and lower leg 13b.

The variable filter region of the upper leg 13a is calculated according to the following formula (Formula 18).

$$Pad_L = L1 + (Pad_{fixed1}) + (Pad_{variable1}) \times 2$$
$$Pad_W = W1 + (Pad_{fixed1}) + (Pad_{variable1}) \times 2$$
$$Pad_H = H1 + (Pad_{fixed1}) + (Pad_{variable1}) \times 2$$
$$.... \quad (Formula\ 18)$$

provided that

L1, W1, and H1 are lengths of three axes of a rectangular parallelepiped enclosing the upper leg 13a for setting the variable filter region.

Moreover, the variable filter region of the lower leg 13b is calculated according to the following formula (Formula 19).

$$Pad_L = L2 + (Pad_{fixed2}) + (Pad_{variable1} + Pad_{variable2}) \times 2$$
$$Pad_W = W2 + (Pad_{fixed2}) + (Pad_{variable1} + Pad_{variable2}) \times 2$$
$$Pad_H = H2 + (Pad_{fixed2}) + (Pad_{variable1} + Pad_{variable2}) \times 2$$
$$.... \quad (Formula\ 19)$$

provided that

L2, W2, and H2 are lengths of three axes of a rectangular parallelepiped enclosing lower leg 13b for setting the variable filter region.

As described above, according to Example 7, it is possible to calculate an optimal filter region even in a configuration in which a plurality of joint units is connected.

Note that, in the Example described above, the example of the configuration in which two rotary joints are connected has been described. However, even in a configuration in which three or more joint units are connected, processing similar to the above description is performed, whereby calculation processing of an optimum filter region can be performed.

[6. (Example 8) Example in which filter processing is performed not on three-dimensional point cloud data but on distance image]

Next, as Example 8, an example in which filter processing is performed not on three-dimensional point cloud data but on a distance image will be described.

The above-described Example has been basically described as an example executed using the configuration of the data processing unit 100 described above with reference to Fig. 9.

The data processing unit 100 illustrated in Fig. 9 is configured to convert a distance image input from the visual sensor 12 into three-dimensional point cloud (PC) data and execute various types of processing such as filter processing and subsequent map data generation processing.

The processing of the present disclosure, that is, the filtering processing for preventing a component such as a leg of the robot device from being recognized as an obstacle can be executed not on three-dimensional point cloud (PC) data but on a distance image input from the visual sensor 12.

Example 8 described below is an example in which the filter processing is performed not on the three-dimensional point cloud data but on the distance image.

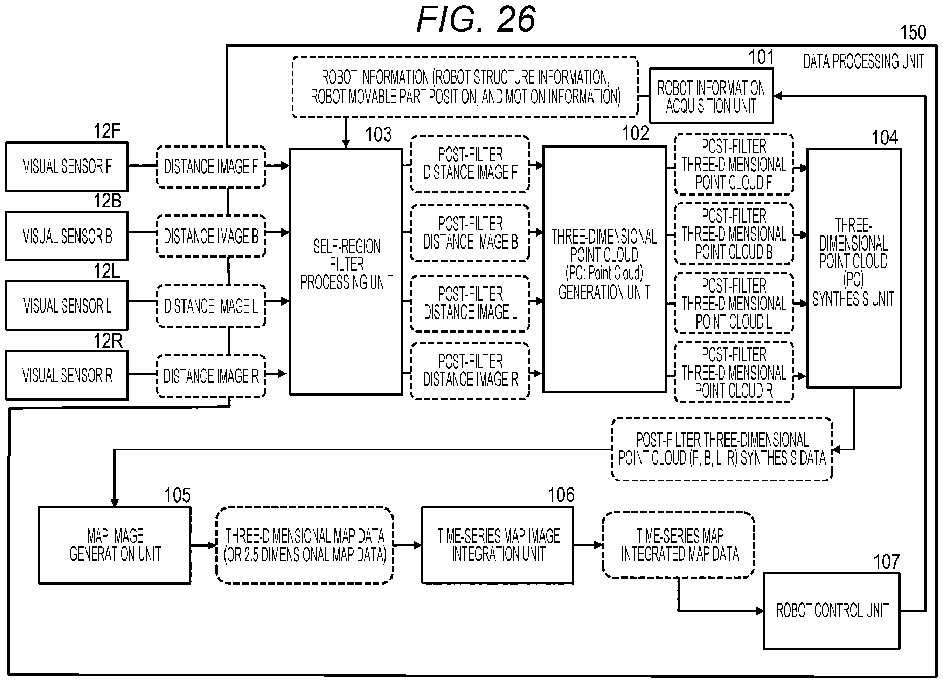

A main configuration of a robot device of Example 8 will be described with reference to Fig. 26.

The configuration illustrated in Fig. 26 will be described focusing on, for example, a data processing unit that performs travel control processing of the four-legged robot 10 described with reference to Fig. 1.

The four visual sensors F to R, 12F to R illustrated in Fig. 26 are visual sensors such as stereo cameras attached to the front, back, left, and right of the four-legged robot 10 described with reference to Fig. 1.

Note that each of the four visual sensors F to R, 12F to R captures, for example, a distance image in which a density value corresponding to a distance to an object included in an imaging range (sensor detection region) of a camera constituting the visual sensor is set as a pixel value.

A distance image F illustrated in Fig. 26 is a distance image acquired by the visual sensor F, 12F that capture an image in the traveling direction (forward direction) of the four-legged robot 10.

The distance image B is a distance image acquired by the visual sensor B, 12B that captures an image in the backward direction opposite to the traveling direction of the four-legged robot 10.

The distance image L is a distance image acquired by the visual sensor L, 12L that captures an image in the left direction with respect to the traveling direction of the four-legged robot 10.

The distance image R is a distance image acquired by the visual sensor R (Right) 12R that captures an image in the right direction with respect to the traveling direction of the four-legged robot 10.

In Example 8, the four distance images acquired by the four visual sensors F, 12F to R, 12R are input to the self-region filter processing unit 103 of a data processing unit 150.

That is, in the present Example 8, the generation processing of the three-dimensional point cloud (PC) data by the three-dimensional point cloud (PC) generation unit 102 described above with reference to Fig. 9 is not performed.

As illustrated in Fig. 26, the data processing unit 150 includes a robot information acquisition unit 101, a self-region filter processing unit 103, a three-dimensional point cloud (PC) generation unit 102, a three-dimensional point cloud (PC) synthesis unit 104, a map image generation unit 105, a time-series map image integration unit 106, and a robot control unit 107.

The robot information acquisition unit 101 acquires robot structure information (robot model information), a robot movable part position, and motion information, and outputs the robot structure information, the robot movable part position, and the motion information to the self-region filter processing unit 103.

The robot structure information (robot model information) is stored in a storage unit (not illustrated).

The robot movable part position and the motion information are acquired from the robot control unit 107 or acquired by using detection information of a sensor attached to the robot.

Note that the robot movable part is a leg, an arm, or the like of the robot.

The self-region filter processing unit 103 of the data processing unit 100 directly uses the four distance images F to R acquired by the four visual sensors F, 12F to the visual sensors R, 12R to perform the setting processing of the variable filter region on each of these distance images, and performs the filter processing of removing the detection information of the movable part such as the leg or the arm of the robot from the distance images F to R using the set variable filter region.

As a result of this filtering process, the self-region filter processing unit 103 generates post-filter distance images F to R, which are the outputs of the self-region filter processing unit 103 illustrated in Fig. 26, and outputs the post-filter distance images F to R to a three-dimensional point cloud (PC) generation unit 102 in the subsequent stage.

Note that the post-filter distance image is a distance image obtained by removing distance data of an object corresponding to the region of the robot itself, which is the self-region, from the four distance images F to R acquired by the four visual sensors F, 12F to R, 12R, that is, by performing filter processing.

The three-dimensional point cloud (PC) generation unit 102 receives the filtered distance images F to R from the self-region filter processing unit 103.

As described above, the post-filter distance images F to R are distance images obtained by removing the distance value data of the structural part of the robot itself, such as the leg part of the robot.

The three-dimensional point cloud (PC) generation unit 102 generates a filtered three-dimensional point cloud (PC) in which the distance value (pixel value) set for each pixel of the input four filtered distance images F to R is expressed as point cloud data on three-dimensional coordinates.

Note that, as described above, each point constituting the three-dimensional point cloud (PC) is a point whose coordinate position on the xyz three-dimensional space is defined. That is, each coordinate value of x, y, and z is assigned to each point of the three-dimensional point cloud configuration.

As illustrated in Fig. 26, the three-dimensional point cloud (PC) generation unit 102 generates the following four filtered three-dimensional point clouds and inputs the generated groups to the next-stage three-dimensional point cloud (PC) synthesis unit 104.

(1) The post-filter three-dimensional point cloud F generated on the basis of the post-filter distance image F acquired by the visual sensor F, 12F and subjected to the self-region filtering process by the self-region filter processing unit 103;

(2) The post-filter three-dimensional point cloud B generated on the basis of the post-filter distance image B acquired by the visual sensor B, 12B and subjected to the self-region filtering process by the self-region filter processing unit 103;

(3) The post-filter three-dimensional point cloud L generated on the basis of the post-filter distance image L acquired by the visual sensor L, 12L and subjected to the self-region filtering process by the self-region filter processing unit 103; and

(4) The post-filter three-dimensional point cloud R generated on the basis of the post-filter distance image R acquired by the visual sensor R, 12R and subjected to the self-region filtering process by the self-region filter processing unit 103.

As illustrated in Fig. 26, the three-dimensional point cloud (PC) generation unit 102 generates the above-described four filtered three-dimensional point clouds and inputs the four filtered three-dimensional point clouds to the next-stage three-dimensional point cloud (PC) synthesis unit 104.

The three-dimensional point cloud (PC) synthesis unit 104 receives the filtered three-dimensional point clouds F to R from a three-dimensional point cloud (PC) generation unit 102.

As described above, the post-filter three-dimensional point clouds F to R are three-dimensional point cloud data obtained by removing the three-dimensional point cloud of the structural portion of the robot itself such as the leg portion of the robot.

The three-dimensional point cloud (PC) synthesis unit 104 synthesizes the input four post-filter three-dimensional point clouds F to R to generate one piece of post-filter three-dimensional point cloud synthesis data.

Fig. 26 illustrates the post-filter three-dimensional point cloud (F, B, L, R) synthesis data as the output of the three-dimensional point cloud (PC) synthesis unit 104.

The post-filter three-dimensional point cloud (F, B, L, R) synthesis data output from the three-dimensional point cloud (PC) synthesis unit 104 is synthesis data of the post-filter three-dimensional point clouds F to R obtained by removing (filtering) the three-dimensional point cloud related to the structural part of the robot from the three-dimensional point clouds F to R generated on the basis of the four distance images F to R which are the outputs of the four visual sensors F, 12F to the visual sensors R, 12R attached to the front, back, left, and right of the four-legged robot 10 illustrated in Fig. 1, and is data indicating the three-dimensional position and three-dimensional shape of the object such as the obstacle other than the robot structural parts around the front, back, left, and right of the four-legged robot 10 by a point cloud.

Note that, as described above, the four visual sensor F, 12F to R and 12R illustrated in Fig. 1 all face obliquely downward, and the post-filter distance image synthesis data is data indicating the distance of surrounding objects below the horizontal plane of the camera position of the four-legged robot 10. The post-filter distance image synthesis data includes a three-dimensional shape such as unevenness and inclination of the traveling surface.

However, the robot structural body such as the leg of the robot is not included because the robot structural body is removed by the filter processing.

The post-filter three-dimensional point cloud (F, B, L, R) synthesis data generated by the three-dimensional point cloud (PC) synthesis unit 104 is input to the map image generation unit 105.

The map image generation unit 105 uses the post-filter three-dimensional point cloud (F, B, L, R) synthesis data generated by the three-dimensional point cloud (PC) synthesis unit 104 to generate map data indicating a three-dimensional shape including a traveling surface of an object around the robot.

Fig. 26 illustrates three-dimensional map data (or 2.5 dimensional map data) as an output of the map image generation unit 105.

The map data generated by the map image generation unit 105 is various types of three-dimensional map data or 2.5 dimensional map data.

Specifically, the data is 2.5 dimensional map data such as a height map.

As described above, the height map is, for example, map data in which height data (z) is recorded in association with a representative coordinate position of two-dimensional coordinates (x, y) of an xy horizontal plane.

The three-dimensional map data (for example, a height map) generated by the map image generation unit 105 is input to the next time-series map image integration unit 106.

The time-series map image integration unit 106 performs integration processing of time-series data of three-dimensional map data (for example, a height map) generated by the map image generation unit 105.

Specifically, for example, the following processing is performed.

(1) Three-dimensional map data (t1) such as a height map generated by the map image generation unit 105 on the basis of the four distance images F to R (t1) captured at the time t1 by the four visual sensors F to R, 12F to R;

(2) Three-dimensional map data (t2) such as a height map generated by the map image generation unit 105 on the basis of the four distance images F to R (t2) captured by the four visual sensors F to R, 12F to R at time t2; and

(3) Three-dimensional map data (t3) such as a height map generated by the map image generation unit 105 on the basis of the four distance images F to R (t3) captured by the four visual sensors F to R, 12F to R at time t3.

The time-series map image integration unit 106 integrates a plurality of pieces of time-series three-dimensional map data (t1) to (t3) generated on the basis of the distance images photographed at different times (t1 to t3) to generate one piece of time-series map integrated map data (for example, an integrated height map) .

That is, the time-series integrated map data (t1) is generated from the three-dimensional map data (t1), and when the three-dimensional map data (t2) is input to the time-series map image integration unit 106, the time-series integrated map data (t1 to t2) is generated. Moreover, when the three-dimensional map data (t3) is input to the time-series map image integration unit 106, time-series map integrated map data (t1 to t3) is generated.

Note that as described above, each of the plurality of pieces of time-series three-dimensional map data (t1) to (t3) generated on the basis of the plurality of pieces of imaging data at different times has an overlapping region, and there is also a region included only in one piece of map data.

As described above, the time-series map image integration unit 106 integrates a plurality of pieces of time-series three-dimensional map data (t1) to (t3) generated on the basis of distance images captured at a plurality of different timings, thereby generating one piece of time-series map integrated map data (integrated height map) capable of acquiring three-dimensional shapes of almost all objects in the camera imaging range around the robot.

One piece of the time-series map integrated map data generated by the time-series map image integration unit 106 is output to the robot control unit 107.

One piece of time-series map integrated map data generated by the time-series map image integration unit 106 is 2.5 dimensional image data such as a height map that enables acquisition of three-dimensional shapes of almost all objects in a camera imaging range around the robot.

However, object position information of the structure of the robot itself such as the leg of the filtered robot is not included. That is, it is 2.5 dimensional image data such as a height map including information regarding an object that is a true obstacle.

The robot control unit 107 refers to one piece of time-series map integrated map data generated by the time-series map image integration unit 106 to confirm the position of an object that can be an obstacle, determines a route that does not collide with or come into contact with these obstacles as a travel route, and moves the legs to perform safe traveling.

Note that, in a case where the robot to be controlled is a robot that performs various works by, for example, the motion of the arm as described above with reference to Fig. 3, the robot control unit 107 refers to one piece of time-series map integrated map data generated by the time-series map image integration unit 106, determines the trajectory of the arm, and executes safe work.

That is, the robot control unit 107 refers to one piece of time-series map integrated map data generated by the time-series map image integration unit 106, confirms the position of an object that can be an obstacle, determines the trajectory of the arm that does not collide with or come into contact with these obstacles, and moves the arm to perform safe work.

As described above, the robot device according to the present disclosure performs the filtering processing of removing the object information of the own device from the sensor detection information so that the own device region is not recognized as an obstacle even in a case where a part of the own device is detected by the sensor, and controls the robot using the map data generated on the basis of the filtered data.

By performing such processing, it is possible to perform correct robot control without erroneously recognizing a part of the own device as an obstacle.

[7. Hardware configuration example of robot device or the like of present disclosure]

Next, a hardware configuration example of the robot device or the like of the present disclosure will be described.

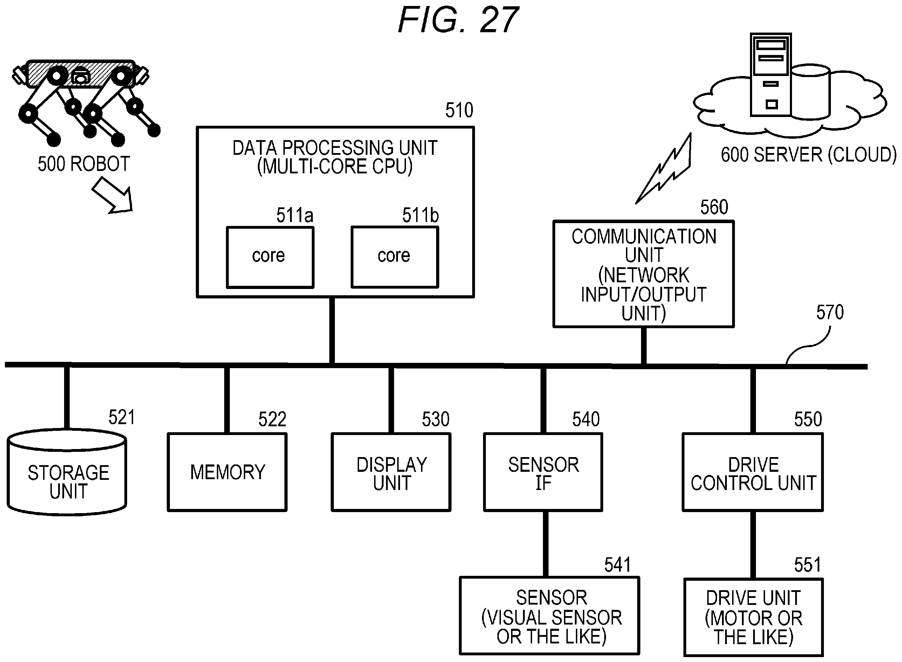

Fig. 27 is a block diagram illustrating a configuration example of a robot 500 of the present disclosure.

As illustrated in Fig. 27, the robot 500 includes a data processing unit 510, a storage unit 521, a memory 522, a display unit 530, a sensor IF 540, a sensor 541, a drive control unit 550, a drive unit 551, a communication unit 560, and a bus 570.

The data processing unit 310 is, for example, a multi-core CPU including a plurality of core CPUs 511a and 511b, and performs data processing according to each of the above-described Examples and various other data processing according to a program stored in the storage unit 521 or the memory 522.

The storage unit 521 and the memory 522 store various information necessary for traveling, such as a program executed in the data processing unit 310 and travel route information of the robot 500.

Furthermore, the data processing unit 510 is also used as a storage area for sensor detection information acquired by the sensor 541 such as a visual sensor, for example, a distance image, and three-dimensional point cloud (PC) data generated in the data processing unit.

The display unit 530 is used, for example, as a display unit of various types of information indicating an operation state of the robot 500 and the like and a display unit of a captured image in the traveling direction. Furthermore, the touch panel may allow the user to input instruction data.

The sensor IF 540 receives detection information of the sensor 541 such as a visual sensor and outputs the detection information to the data processing unit 510. Alternatively, the sensor detection information is stored in the storage unit 521 or the memory 522.

The sensor 541 includes the visual sensor and the like described in the above-described Examples. For example, the camera is a camera that captures a distance image or the like.

The drive control unit 550 controls the drive unit 551 including a motor or the like to operate and move the robot 500.

The communication unit 560 communicates with an external device, for example, a server 600 on the cloud side via a communication network. The server 600 notifies the robot 500 of a destination, route information for going to the destination, and the like.

The bus 570 is used as a data transfer path between the components.

Note that the server 600 is not an essential configuration, and may be configured to store a destination, route information for going to the destination, and the like in the robot 500 and perform processing by the robot 500 alone.

Furthermore, conversely, a configuration may also be adopted in which control information for the robot 500 is determined by executing data processing according to the Examples described above on a side of the server 600.

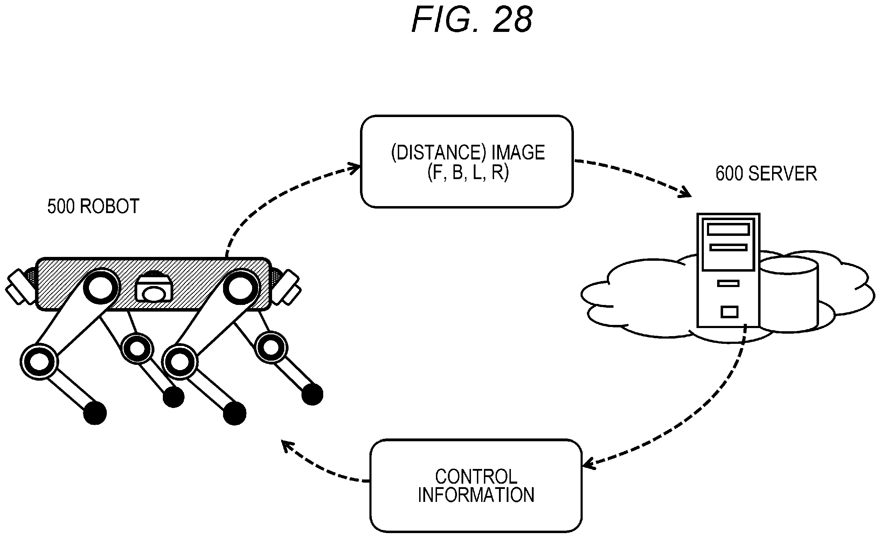

For example, as illustrated in Fig. 28, the robot 500 and the server 600 are connected by a communication network, and an image that is detection information of a visual sensor attached to the robot 500, specifically, for example, a distance image is transmitted to the server 600.

The server 600 receives an image from the robot 500, executes data processing according to the above-described Example, generates control information of the robot 500, and transmits the control information to the robot 500.

The robot 500 operates in accordance with control information received from the server 600.

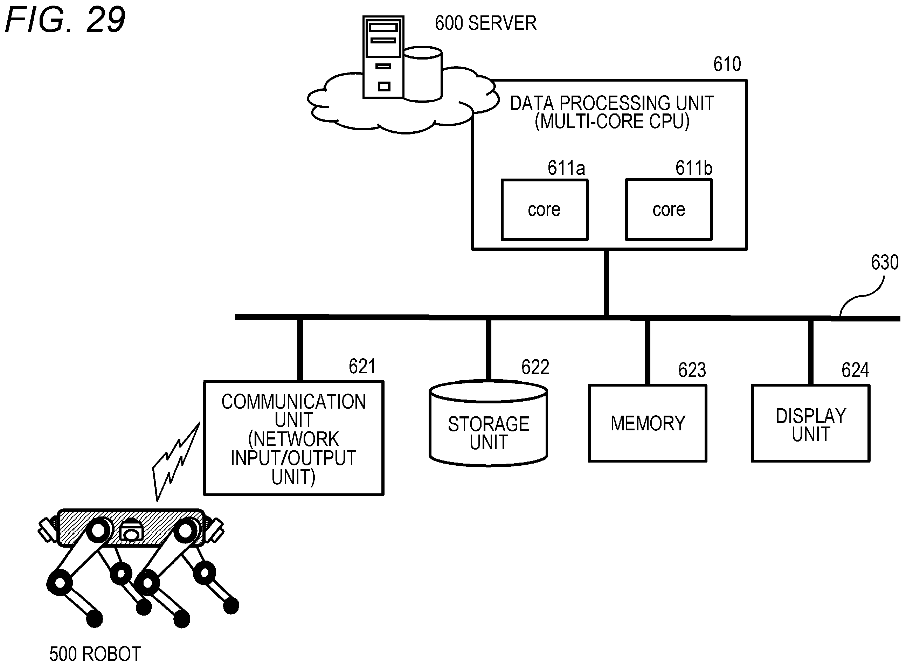

Note that the server 600 that performs data processing as described above has a hardware configuration as illustrated in Fig. 29, for example.

As illustrated in Fig. 29, the server 600 includes a data processing unit 610, a communication unit 621, a storage unit 622, a memory 623, a display unit 624, and a bus 630.

The data processing unit 610 is, for example, a multi-core CPU including a plurality of core CPUs 611a, b, and performs data processing according to each of the above-described Examples and various other data processing according to a program stored in the storage unit 622 or the memory 623.

The communication unit 621 communicates with the robot 500 via a communication network.

For example, sensor detection information acquired by a visual sensor or the like of the robot 500, for example, a distance image is received. Furthermore, the server 600 transmits the control information generated according to the above-described Example to the robot 500. Furthermore, it is also used for a process of transmitting a destination, route information for going to the destination, and the like to the robot 500.

The storage unit 622 and the memory 623 store various information necessary for traveling, such as a program executed in the data processing unit 610 and travel route information of the robot 500.

Furthermore, the sensor detection information acquired by the visual sensor or the like of the robot 500, for example, the distance image is also used as a storage area of the received data in a case where the sensor detection information is received via the communication unit 621. Furthermore, the data processing unit 610 is also used as a storage area for three-dimensional point cloud (PC) data generated by the data processing unit.

The display unit 624 is used, for example, as a display unit of various types of information indicating an operation state of the robot 500 and the like and a display unit of a captured image in the traveling direction. Furthermore, the touch panel may allow the user to input instruction data.

The bus 630 is used as a data transfer path between the components.

[8. Conclusion of configuration of present disclosure]

Hereinabove, the examples according to the present disclosure have been described in detail with reference to the specific Examples. However, it is obvious that those skilled in the art can modify or substitute the examples without departing from the gist of the present disclosure. That is, the present invention has been disclosed in the form of exemplification, and should not be interpreted in a limited manner. In order to determine the gist of the present disclosure, the claims should be considered.

Note that the technology disclosed herein can have the following configurations.

(1) A robot device including

a data processing unit that analyzes detection information of a visual sensor and controls an operation of the robot device,
in which the data processing unit includes
a self-region filter processing unit that removes object information corresponding to a component of the robot device from object information included in the detection information of the visual sensor,
the self-region filter processing unit includes:

a variable filter region calculation unit that calculates a variable filter region corresponding to a movable part of the robot device; and
a filter processing unit that removes object information in the variable filter region from the detection information of the visual sensor, and
the variable filter region calculation unit calculates variable filter regions having different sizes according to a motion speed of the movable part as a variable filter region calculation target.

(2) The robot device according to (1), further including:

a map image generation unit that generates map data based on object information from which object information corresponding to the component of the robot device has been removed in the self-region filter processing unit; and
a robot control unit that controls the robot device on the basis of the map data generated by the map image generation unit.

(3) The robot device according to (1) or (2), in which
the variable filter region calculation unit calculates a larger variable filter region as a motion speed of the movable part as the variable filter region calculation target is larger.
(4) The robot device according to any one of (1) to (3), in which
the variable filter region calculation unit calculates a larger variable filter region as a rotation speed of the movable part as the variable filter region calculation target is larger.
(5) The robot device according to any one of (1) to (4), in which
the variable filter region calculation unit calculates a larger variable filter region as a linear motion speed of the movable part as the variable filter region calculation target is larger.
(6) The robot device according to any one of (1) to (5), further including

a three-dimensional point cloud generation unit that generates three-dimensional point cloud data based on input information from the visual sensor,
in which the self-region filter processing unit executes processing of removing three-dimensional point cloud data corresponding to a component of a robot corresponding to a component of the robot device from the three-dimensional point cloud data input from the three-dimensional point cloud generation unit.

(7) The robot device according to (6), in which

the visual sensor inputs a distance image to the three-dimensional point cloud generation unit, and
the three-dimensional point cloud generation unit generates three-dimensional point cloud data based on the distance image input from the visual sensor.

(8) The robot device according to any one of (1) to (7), in which

the visual sensor inputs a distance image to the self-region filter processing unit, and
the self-region filter processing unit executes processing of removing data corresponding to a component of a robot corresponding to the component of the robot device from a distance image input from the visual sensor.

(9) The robot device according to any one of (1) to (8), in which
the self-region filter processing unit includes:

a variable padding calculation unit that calculates different variable padding according to a motion speed of the movable part as the variable filter region calculation target;

a variable filter region calculation unit that calculates a variable filter region defined by the variable padding calculated by the variable padding calculation unit; and

a filter processing unit that removes object information in the variable filter region from the detection information of the visual sensor using the variable filter region calculated by the variable region calculation unit.

(10) The robot device according to (9), in which

in a case where the movable part as the variable filter region calculation target is configured to be rotationally driven by drive of a rotary joint, the variable padding calculation unit calculates a larger variable padding as a rotational speed is larger.

(11) The robot device according to (9), in which

in a case where the movable part as the variable filter region calculation target is configured to linearly move by drive of a linear motion joint, the variable padding calculation unit calculates a larger variable padding as a linear motion speed is larger.

(12) The robot device according to any one of (1) to (11), in which

the variable filter region calculation unit calculates variable filter regions having different extents for an operation region and a non-operation region of the movable part as the variable filter region calculation target.

(13) The robot device according to any one of (1) to (12), in which

the variable filter region calculation unit calculates variable filter regions having different extents for a motion direction and a non-motion direction of the movable part as the variable filter region calculation target.

(14) The robot device according to any one of (1) to (13), in which

the variable filter region calculation unit calculates, for the movable part as the variable filter region calculation target, a variable filter region defined by two padding of fixed padding fixed in advance and variable padding changing according to a motion speed of the movable part.

(15) A robot control method for executing motion control of a robot device, the robot control method including:

a self-region filter processing step of removing, by a self-region filter processing unit, object information corresponding to a component of the robot device from object information included in detection information of a visual sensor;

a map data generation step of generating, by a map image generation unit, map data based on object information from which object information corresponding to the component of the robot device has been removed; and

a robot control step of controlling, by a robot control unit, the robot device on the basis of the map data,

in which the self-region filter processing step includes:

a step of executing a variable filter region calculation process of calculating variable filter regions having different sizes according to a motion speed of a movable part of the robot device; and

a step of executing a process of removing object information in the variable filter regions from the detection information of the visual sensor.

Note that a series of processing herein described can be executed by hardware, software, or a combined configuration of the both. In a case where processing by software is executed, a program in which a processing sequence is recorded can be installed and executed in a memory in a computer incorporated in dedicated hardware, or the program can be installed and executed in a general-purpose computer capable of executing various types of processing. For example, the program can be recorded in advance in a recording medium. In addition to being installed on a computer from a recording medium, the program can be received via a network such as a local area network (LAN) or the Internet and installed on a recording medium such as an internal hard disk.

Furthermore, the various types of processing herein described may be performed not only in time series as described, but also in parallel or individually in accordance with the processing capability of the device that performs the processing or as necessary. Furthermore, a system herein described is a logical set configuration of a plurality of devices, and is not limited to a system in which devices of respective configurations are in the same housing.

INDUSTRIAL APPLICABILITY

As described above, according to the configuration of an example of the present disclosure, in a robot device that identifies an obstacle on the basis of detection information of a sensor, highly accurate robot control by correct obstacle identification is realized without erroneously recognizing a leg, an arm, or the like of the robot itself as an obstacle.

Specifically, for example, the self-region filter processing unit removes the object information corresponding to the component of the robot device from the object information included in the detection information of the visual sensor,

# EP 4 385 680 A1

the map image generation unit generates map data based on the object information from which the object information corresponding to the component of the robot device has been removed, and the robot control unit controls the robot device on the basis of the generated map data. The self-region filter processing unit calculates variable filter regions of different sizes according to the motion speed of the movable part of the robot device, and executes processing of removing the object information in the variable filter regions from the detection information of the visual sensor.

With this configuration, in the robot device that identifies an obstacle on the basis of the detection information of the sensor, highly accurate robot control by correct obstacle identification is realized without erroneously recognizing a leg, an arm, or the like of the robot itself as an obstacle.

REFERENCE SIGNS LIST

| | |
|---|---|
| 10 | Four-legged robot |
| 11 | Main body |
| 12 | Visual sensor |
| 13 | Leg |
| 14 | Rotary joint |
| 15 | Linear motion joint |
| 16 | Wheel part |
| 17 | Rotary joint |
| 18 | Ground contact part |
| 20 | Two-legged robot |
| 21 | Main body |
| 22 | Visual sensor |
| 23 | Leg |
| 24, 25 | Rotary joint |
| 26 | Ground contact part |
| 27 | Arm |
| 28, 29 | Rotary joint |
| 30 | Grip part |
| 100 | Data processing unit |
| 101 | Robot information acquisition unit |
| 102 | Three-dimensional point cloud (PC) generation unit |
| 103 | Self-region filter processing unit |
| 104 | Three-dimensional point cloud (PC) synthesis unit |
| 105 | Map image generation unit |
| 106 | Time-series map image integration unit |
| 107 | Robot control unit |
| 121 | Variable padding calculation unit |
| 122 | Variable filter region calculation unit |
| 123 | Three-dimensional point cloud filter processing |
| unit 500 | Robot |
| 510 | Data processing unit |
| 521 | Storage unit |
| 522 | Memory |
| 530 | Display unit |
| 540 | Sensor IF |
| 541 | Sensor |
| 550 | Drive control unit |
| 551 | Drive unit |
| 560 | Communication unit |
| 570 | Bus |
| 600 | Server |
| 610 | Data processing unit |
| 621 | Communication unit |
| 622 | Storage unit |
| 623 | Memory |

624     Display unit
630     Bus

**Claims**

1. A robot device comprising

   a data processing unit that analyzes detection information of a visual sensor and controls an operation of the robot device,
   wherein the data processing unit includes
   a self-region filter processing unit that removes object information corresponding to a component of the robot device from object information included in the detection information of the visual sensor,
   the self-region filter processing unit includes:

      a variable filter region calculation unit that calculates a variable filter region corresponding to a movable part of the robot device; and
      a filter processing unit that removes object information in the variable filter region from the detection information of the visual sensor, and
      the variable filter region calculation unit calculates variable filter regions having different sizes according to a motion speed of the movable part as a variable filter region calculation target.

2. The robot device according to claim 1, further comprising:

   a map image generation unit that generates map data based on object information from which object information corresponding to the component of the robot device has been removed in the self-region filter processing unit; and
   a robot control unit that controls the robot device on a basis of the map data generated by the map image generation unit.

3. The robot device according to claim 1, wherein
   the variable filter region calculation unit calculates a larger variable filter region as a motion speed of the movable part as the variable filter region calculation target is larger.

4. The robot device according to claim 1, wherein
   the variable filter region calculation unit calculates a larger variable filter region as a rotation speed of the movable part as the variable filter region calculation target is larger.

5. The robot device according to claim 1, wherein
   the variable filter region calculation unit calculates a larger variable filter region as a linear motion speed of the movable part as the variable filter region calculation target is larger.

6. The robot device according to claim 1, further comprising

   a three-dimensional point cloud generation unit that generates three-dimensional point cloud data based on input information from the visual sensor,
   wherein the self-region filter processing unit executes processing of removing three-dimensional point cloud data corresponding to a component of a robot corresponding to a component of the robot device from the three-dimensional point cloud data input from the three-dimensional point cloud generation unit.

7. The robot device according to claim 6, wherein

   the visual sensor inputs a distance image to the three-dimensional point cloud generation unit, and
   the three-dimensional point cloud generation unit generates three-dimensional point cloud data based on the distance image input from the visual sensor.

8. The robot device according to claim 1, wherein

   the visual sensor inputs a distance image to the self-region filter processing unit, and

the self-region filter processing unit executes processing of removing data corresponding to a component of a robot corresponding to the component of the robot device from a distance image input from the visual sensor.

9. The robot device according to claim 1, wherein
the self-region filter processing unit includes:

a variable padding calculation unit that calculates different variable padding according to a motion speed of the movable part as the variable filter region calculation target;
a variable filter region calculation unit that calculates a variable filter region defined by the variable padding calculated by the variable padding calculation unit; and
a filter processing unit that removes object information in the variable filter region from the detection information of the visual sensor using the variable filter region calculated by the variable region calculation unit.

10. The robot device according to claim 9, wherein
in a case where the movable part as the variable filter region calculation target is configured to be rotationally driven by drive of a rotary joint, the variable padding calculation unit calculates a larger variable padding as a rotational speed is larger.

11. The robot device according to claim 9, wherein
in a case where the movable part as the variable filter region calculation target is configured to linearly move by drive of a linear motion joint, the variable padding calculation unit calculates a larger variable padding as a linear motion speed is larger.

12. The robot device according to claim 1, wherein
the variable filter region calculation unit calculates variable filter regions having different extents for an operation region and a non-operation region of the movable part as the variable filter region calculation target.

13. The robot device according to claim 1, wherein
the variable filter region calculation unit calculates variable filter regions having different extents for a motion direction and a non-motion direction of the movable part as the variable filter region calculation target.

14. The robot device according to claim 1, wherein
the variable filter region calculation unit calculates, for the movable part as the variable filter region calculation target, a variable filter region defined by two padding of fixed padding fixed in advance and variable padding changing according to a motion speed of the movable part.

15. A robot control method for executing motion control of a robot device, the robot control method comprising:

a self-region filter processing step of removing, by a self-region filter processing unit, object information corresponding to a component of the robot device from object information included in detection information of a visual sensor;
a map data generation step of generating, by a map image generation unit, map data based on object information from which object information corresponding to the component of the robot device has been removed; and
a robot control step of controlling, by a robot control unit, the robot device on a basis of the map data,
wherein the self-region filter processing step includes:

a step of executing a variable filter region calculation process of calculating variable filter regions having different sizes according to a motion speed of a movable part of the robot device; and
a step of executing a process of removing object information in the variable filter regions from the detection information of the visual sensor.

*FIG. 1*

*FIG. 2*

10b FOUR-LEGGED ROBOT b

11 MAIN BODY

12L VISUAL SENSOR L

12F VISUAL SENSOR F

14 ROTARY JOINT

12B VISUAL SENSOR B

TRAVELING DIRECTION

13 LEG

17 LINEAR MOTION JOINT

18 GROUND CONTACT PART

FIG. 3

EP 4 385 680 A1

# FIG. 4

10 FOUR-LEGGED ROBOT

TRAVELING DIRECTION

FIG. 5

(a)

12F VISUAL SENSOR F

10 FOUR-LEGGED ROBOT

OBSTACLE

OBSTACLE

OBSTACLE

(b)

SENSOR DETECTION REGION

12F VISUAL SENSOR F

10 FOUR-LEGGED ROBOT

OBSTACLE

OBSTACLE

OBSTACLE

MAY BE ERRONEOUSLY RECOGNIZED AS OBSTACLE

EP 4 385 680 A1

# FIG. 6

(a)

10 FOUR-LEGGED ROBOT

13 LEG

(b) FILTER REGION IS SET IN MOVABLE PART OF ROBOT

10 FOUR-LEGGED ROBOT

FILTER REGION
(= OBSTACLE DETECTION
EXCLUSION REGION)

EP 4 385 680 A1

FIG. 7

# FIG. 8

10 FOUR-LEGGED ROBOT

(P1)

(P2)

(P3)

(P4)

SMALL ⬅ VARIABLE FILTER REGION (=OBSTACLE DETECTION EXCLUSION REGION) ➡ LARGE

EP 4 385 680 A1

## FIG. 9

EP 4 385 680 A1

## FIG. 10

(1) PROCESSING EXAMPLE OF THREE-DIMENSIONAL POINT CLOUD GENERATION UNIT

SENSOR DETECTION REGION

12F VISUAL SENSOR F

10 FOUR-LEGGED ROBOT

OBSTACLE

OBSTACLE

OBSTACLE

THREE-DIMENSIONAL POINT CLOUD OF ROBOT LEG THAT MAY BE ERRONEOUSLY RECOGNIZED AS OBSTACLE

THREE-DIMENSIONAL POINT CLOUD F

EP 4 385 680 A1

## FIG. 11

ROBOT INFORMATION ACQUISITION UNIT — 101

ROBOT INFORMATION (ROBOT STRUCTURE INFORMATION, ROBOT MOVABLE PART POSITION, AND MOTION INFORMATION)

SELF-REGION FILTER PROCESSING UNIT — 103

VARIABLE PADDING CALCULATION UNIT — 121

VARIABLE FILTER REGION CALCULATION UNIT — 122

THREE-DIMENSIONAL POINT CLOUD (PC: Point Cloud) GENERATION UNIT — 102

THREE-DIMENSIONAL POINT CLOUD F

THREE-DIMENSIONAL POINT CLOUD B

THREE-DIMENSIONAL POINT CLOUD L

THREE-DIMENSIONAL POINT CLOUD R

THREE-DIMENSIONAL POINT CLOUD FILTER PROCESSING UNIT — 123

POST-FILTER THREE-DIMENSIONAL POINT CLOUD F

POST-FILTER THREE-DIMENSIONAL POINT CLOUD B

POST-FILTER THREE-DIMENSIONAL POINT CLOUD L

POST-FILTER THREE-DIMENSIONAL POINT CLOUD R

THREE-DIMENSIONAL POINT CLOUD (PC) SYNTHESIS UNIT — 104

EP 4 385 680 A1

# FIG. 12

(2-1) PROCESSING EXAMPLE OF VARIABLE PADDING CALCULATION UNIT OF
SELF-REGION FILTER PROCESSING UNIT (VARIABLE PADDING CALCULATION PROCESSING)

10 FOUR-LEGGED ROBOT

(1) VARIABLE PADDING CALCULATION FORMULA

$$Pad_{variable} = \tan(\omega \times st) \times Length_{leg}$$

(a)

$$L \quad (Length_{leg})$$

W

H

(b)

$$L \quad (Length_{leg})$$

W

(c)

$$\theta$$

(d)

$$\theta$$

$$L \quad (Length_{leg})$$

$$(\theta = \omega \times st)$$

$$Pad_{variable}$$

EP 4 385 680 A1

## FIG. 13

(2-2a) PROCESSING EXAMPLE OF VARIABLE FILTER REGION CALCULATION UNIT OF
SELF-REGION FILTER PROCESSING UNIT (VARIABLE FILTER REGION CALCULATION PROCESSING)

<u>10 FOUR-LEGGED ROBOT</u>

(1) VARIABLE PADDING CALCULATION FORMULA
$$Pad_{variable} = \tan(\omega \times st) \times Length_{leg}$$

(2) VARIABLE FILTER REGION CALCULATION FORMULA
$$Pad_L = \text{L} + Pad_{variable} \times 2$$
$$Pad_W = \text{W} + Pad_{variable} \times 2$$
$$Pad_H = \text{H} + Pad_{variable} \times 2$$

(a)

$Pad_{variable}$

$\theta$

L

$(Length_{leg})$

$Pad_{variable}$

(b)

$Pad_{variable}$   $Pad_{variable}$

L

$Pad_{variable}$

W

$Pad_{variable}$

(c)

VARIABLE FILTER REGION
(= OBSTACLE DETECTION
EXCLUSION REGION)

L

W   H

$Pad_L$
$(= \text{L} + Pad_{variable} \times 2)$

$Pad_H$
$(= \text{H} + Pad_{variable} \times 2)$

$Pad_W$
$(= \text{W} + Pad_{variable} \times 2)$

EP 4 385 680 A1

# FIG. 14

EP 4 385 680 A1

(2-2b) PROCESSING EXAMPLE OF VARIABLE FILTER REGION CALCULATION UNIT OF
SELF-REGION FILTER PROCESSING UNIT (VARIABLE FILTER REGION CALCULATION PROCESSING)

<u>10 FOUR-LEGGED ROBOT</u>

(1) VARIABLE PADDING CALCULATION FORMULA
$$Pad_{variable} = \tan(\omega \times st) \times Length_{leg}$$

(2) VARIABLE FILTER REGION CALCULATION FORMULA
$$Pad_L = L + Pad_{variable} \times 2$$
$$Pad_W = W + Pad_{variable} \times 2$$
$$Pad_H = H + Pad_{variable} \times 2$$

(a)

$$(\theta = \omega \times st)$$

$Length_{leg}$

$Pad_{variable}$

(b)

$Pad_{variable}$

VARIABLE FILTER REGION
(= OBSTACLE DETECTION
EXCLUSION REGION)

$Pad_{variable}$

$Pad_{variable}$

$Pad_{variable}$

## FIG. 15

(2-2c) PROCESSING EXAMPLE OF VARIABLE FILTER REGION CALCULATION UNIT OF SELF-REGION FILTER PROCESSING UNIT (VARIABLE FILTER REGION CALCULATION PROCESSING)

10 FOUR-LEGGED ROBOT

VARIABLE FILTER REGION
(= OBSTACLE DETECTION EXCLUSION REGION)

# FIG. 16

(2−3) PROCESSING EXAMPLE OF THREE-DIMENSIONAL POINT CLOUD FILTER PROCESSING UNIT OF SELF-REGION FILTER PROCESSING UNIT (THREE-DIMENSIONAL POINT CLOUD FILTER PROCESSING)

SENSOR DETECTION REGION

12F VISUAL SENSOR F

10 FOUR-LEGGED ROBOT

OBSTACLE

OBSTACLE

OBSTACLE

VARIABLE FILTER REGION (=OBSTACLE DETECTION EXCLUSION REGION)

THREE-DIMENSIONAL POINT CLOUD OF ROBOT'S LEG IS REMOVED BY FILTER

POST-FILTER THREE-DIMENSIONAL POINT CLOUD F

EP 4 385 680 A1

# FIG. 17

(2−2b) PROCESSING EXAMPLE OF VARIABLE FILTER REGION CALCULATION UNIT OF
SELF-REGION FILTER PROCESSING UNIT (VARIABLE FILTER REGION CALCULATION PROCESSING)

<u>10 FOUR-LEGGED ROBOT</u>

(1) VARIABLE PADDING CALCULATION FORMULA
$$Pad_{variable} = \tan(\omega \times st) \times Length_{leg}$$

(2) VARIABLE FILTER REGION CALCULATION FORMULA
$$Pad_L = L + Pad_{variable} \times 2$$
$$Pad_W = W + Pad_{variable} \times 2$$
$$Pad_H = H + Pad_{variable} \times 2$$

(a)

$\theta$

$$(\theta = \omega \times st)$$

$Pad_{variable}$

(b)

$Pad_{variable}$

$Pad_{variable}$

VARIABLE FILTER REGION
(= OBSTACLE DETECTION
EXCLUSION REGION)

$Pad_{variable}$

$Pad_{variable}$

## FIG. 18

(2−2d) PROCESSING EXAMPLE OF VARIABLE FILTER REGION CALCULATION UNIT OF SELF-REGION FILTER PROCESSING UNIT (VARIABLE FILTER REGION CALCULATION PROCESSING)

10 FOUR-LEGGED ROBOT

LEFT FRONT LEG VARIABLE FILTER REGION (=OBSTACLE DETECTION EXCLUSION REGION)

RIGHT FRONT LEG VARIABLE FILTER REGION (=OBSTACLE DETECTION EXCLUSION REGION)

RIGHT BACK LEG VARIABLE FILTER REGION (=OBSTACLE DETECTION EXCLUSION REGION)

LEFT BACK LEG VARIABLE FILTER REGION (=OBSTACLE DETECTION EXCLUSION REGION)

EP 4 385 680 A1

# FIG. 19

10 FOUR-LEGGED ROBOT

VARIABLE FILTER REGION (= OBSTACLE DETECTION EXCLUSION REGION)

VARIABLE FILTER REGION (= OBSTACLE DETECTION EXCLUSION REGION)

(a) LEFT FRONT LEG MOTION SPEED =0 (ANGULAR VELOCITY $\omega$=0 (STOP))

(b) LEFT FRONT LEG MOTION SPEED =LOW (ANGULAR VELOCITY $\omega$=LOW)

(c) LEFT FRONT LEG MOTION SPEED =MEDIUM (ANGULAR VELOCITY $\omega$=MEDIUM)

(d) LEFT FRONT LEG MOTION SPEED =HIGH (ANGULAR VELOCITY $\omega$=HIGH)

SMALL ← VARIABLE FILTER REGION (= OBSTACLE DETECTION EXCLUSION REGION) → LARGE

## FIG. 20

CALCULATION PROCESSING EXAMPLE OF VARIABLE PADDING AND VARIABLE FILTER REGION
IN SELF-REGION FILTER PROCESSING UNIT

10 FOUR-LEGGED ROBOT

15 LINEAR MOTION JOINT

13 LEG

(a)

(1) VARIABLE PADDING CALCULATION FORMULA
$$Pad_{variable} = (v \times st) \times weight$$

(2) VARIABLE FILTER REGION CALCULATION FORMULA
$$Pad_L = L + Pad_{variable} \times 2$$
$$Pad_W = W + Pad_{variable} \times 2$$
$$Pad_H = H + Pad_{variable} \times 2$$

(b)

13 LEG

15 LINEAR MOTION JOINT

$v$

19 LOWER LEG

L

L2

$Pad_{variable}$

$Pad_{variable}$

$Pad_{variable}$

$Pad_{variable}$

$Pad_{variable}$

VARIABLE FILTER REGION
(= OBSTACLE DETECTION
EXCLUSION REGION)

EP 4 385 680 A1

# FIG. 21

CALCULATION PROCESSING EXAMPLE OF VARIABLE PADDING AND VARIABLE FILTER REGION
IN SELF-REGION FILTER PROCESSING UNIT

14 ROTARY JOINT

10 FOUR-LEGGED ROBOT

15 LINEAR MOTION JOINT

13 LEG

(a1)

$(\theta = \omega \times st)$

14 ROTARY JOINT

$\theta$

$L$
$(Length_{leg})$

$Pad_{variable(\omega)}$

$Pad_{variable(\omega)}$

(a2)

13 LEG

15 LINEAR MOTION JOINT

19 LOWER LEG

$v$

$L$

$L2$

$Pad_{variable(v)}$

(b)

$Pad_{variable(\omega)}$

$Pad_{variable(v)}$

$Pad_{variable(\omega)}$

VARIABLE FILTER REGION
(= OBSTACLE DETECTION
EXCLUSION REGION)

$Pad_{variable(v)}$

$Pad_{variable(v)}$

$Pad_{variable(v)} > Pad_{variable(\omega)}$

EP 4 385 680 A1

*FIG. 22*

10 FOUR-LEGGED ROBOT

14 ROTARY JOINT

13 LEG

(a)

14 ROTARY JOINT

(b)

L $(Length_{leg})$

H

W

L $(Length_{leg})$

13 LEG

W

(c)

VARIABLE FILTER REGION (= OBSTACLE DETECTION EXCLUSION REGION)

L

W

H

$Pad_L$ $(= L + Pad_{variable} \times 2)$

$Pad_H (= H)$

$Pad_W$ $(= W + Pad_{variable} \times 2)$

EP 4 385 680 A1

# FIG. 23

14 ROTARY JOINT

10 FOUR-LEGGED ROBOT

13 LEG

(a)

L
$(Length_{leg})$

W

H

14 ROTARY JOINT
(ROTATION DIRECTION @t)

(b)

13 LEG

L
$(Length_{leg})$

W

(c)

VARIABLE FILTER REGION
(= OBSTACLE DETECTION EXCLUSION REGION)

L

$Pad_L$
$(= L + Pad_{variable} \times 2)$

H

W

$Pad_W$
$(= W + Pad_{variable})$

$Pad_H (= H)$

EP 4 385 680 A1

# FIG. 24

14 ROTARY JOINT    10 FOUR-LEGGED ROBOT

13 LEG

(1) VARIABLE PADDING CALCULATION FORMULA
$$Pad_{variable} = \tan(\omega \times st) \times Length_{leg}$$

(2) VARIABLE FILTER REGION CALCULATION FORMULA
$$Pad_L = L + Pad_{fixed} + Pad_{variable} \times 2$$
$$Pad_W = W + Pad_{fixed} + Pad_{variable} \times 2$$
$$Pad_H = H + Pad_{fixed} + Pad_{variable} \times 2$$

(a)

L
$(Length_{leg})$

H

W

14 ROTARY JOINT (b)

L
$(Length_{leg})$

13 LEG

W

(c)

FIXED FILTER REGION
$(Pad_{fixed})$

VARIABLE FILTER REGION
$(Pad_{variable})$

$Pad_L$
$(= L + Pad_{fixed}$
$+ Pad_{variable} \times 2)$

$Pad_H (= H + Pad_{fixed}$
$+ Pad_{variable} \times 2)$

$Pad_W (= W + Pad_{fixed}$
$+ Pad_{variable} \times 2)$

EP 4 385 680 A1

# FIG. 25

14 ROTARY JOINT
10 FOUR-LEGGED ROBOT
13 LEG
17 ROTARY JOINT

(a)
14 ROTARY JOINT
L1
(ANGULAR VELOCITY: $\omega 1$)
13a UPPER LEG
17 ROTARY JOINT
(ANGULAR VELOCITY: $\omega 2$)
L2
13b LOWER LEG

(b)
$Pad_{W1}$
$Pad_{L1}$
$Pad_{L2}$
$Pad_{W2}$

UPPER LEG VARIABLE FILTER REGION (= OBSTACLE DETECTION EXCLUSION REGION)

LOWER LEG VARIABLE FILTER REGION (= OBSTACLE DETECTION EXCLUSION REGION)

$Pad_{L2} > Pad_{L1}$
$Pad_{W2} > Pad_{W1}$

EP 4 385 680 A1

# FIG. 26

EP 4 385 680 A1

# FIG. 27

500 ROBOT

510
DATA PROCESSING UNIT
(MULTI-CORE CPU)

511a — core
511b — core

600 SERVER (CLOUD)

560
COMMUNICATION UNIT
(NETWORK INPUT/OUTPUT UNIT)

570

521
STORAGE UNIT

522
MEMORY

530
DISPLAY UNIT

540
SENSOR IF

550
DRIVE CONTROL UNIT

541
SENSOR
(VISUAL SENSOR OR THE LIKE)

551
DRIVE UNIT
(MOTOR OR THE LIKE)

EP 4 385 680 A1

## FIG. 28

EP 4 385 680 A1

EP 4 385 680 A1

# FIG. 29

**600 SERVER**

**610**
DATA PROCESSING UNIT
(MULTI-CORE CPU)

**611a**
core

**611b**
core

**630**

**621**
COMMUNICATION
UNIT
(NETWORK
INPUT/OUTPUT
UNIT)

**622**
STORAGE
UNIT

**623**
MEMORY

**624**
DISPLAY
UNIT

**500 ROBOT**

## INTERNATIONAL SEARCH REPORT

International application No.

**PCT/JP2022/014836**

### A. CLASSIFICATION OF SUBJECT MATTER

***B25J 13/08***(2006.01)i
FI: B25J13/08 A

According to International Patent Classification (IPC) or to both national classification and IPC

### B. FIELDS SEARCHED

Minimum documentation searched (classification system followed by classification symbols)

B25J1/00-21/02, G05D1/00-1/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-6519 A (TOYOTA MOTOR CORP) 17 January 2008 (2008-01-17) entire text, all drawings | 1-15 |
| A | JP 2008-302496 A (PANASONIC CORP) 18 December 2008 (2008-12-18) paragraph [0050], fig. 1-2 | 1-15 |
| A | US 2020/0117198 A1 (BOSTON DYNAMICS, INC.) 16 April 2020 (2020-04-16) entire text, all drawings | 1-15 |
| A | CN 112051797 A (TENCENT TECHNOLOGY (SHENZHEN) CO., LTD.) 08 December 2020 (2020-12-08) paragraph [0247], fig. 1, 4 | 1-15 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/014836**

| Patent document cited in search report | | | Publication date (day/month/year) | Patent family member(s) | | | Publication date (day/month/year) |
|---|---|---|---|---|---|---|---|
| JP | 2008-6519 | A | 17 January 2008 | US | 2009/0208094 | A1 | |
| | | | | entire text, all drawings | | | |
| | | | | WO | 2008/001793 | A1 | |
| | | | | EP | 2033748 | A1 | |
| | | | | CN | 101479082 | A | |
| JP | 2008-302496 | A | 18 December 2008 | US | 2009/0171505 | A1 | |
| | | | | paragraph [0098], fig. 1-2 | | | |
| | | | | WO | 2008/004487 | A1 | |
| | | | | CN | 101432103 | A | |
| US | 2020/0117198 | A1 | 16 April 2020 | WO | 2020/076418 | A1 | |
| | | | | EP | 3864483 | A1 | |
| | | | | KR | 10-2021-0068446 | A | |
| CN | 112051797 | A | 08 December 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4961860 B
- JP 2011212818 A
- JP 1183395 A